(19) Europäisches Patentamt
European Patent Office
Office européen des brevets

(11) **EP 2 985 861 A1**

(12) **EUROPEAN PATENT APPLICATION**
published in accordance with Art. 153(4) EPC

(43) Date of publication:
**17.02.2016 Bulletin 2016/07**

(51) Int Cl.:
***H02J 50/00*** (2016.01)   ***H01F 38/14*** (2006.01)
***H02J 7/00*** (2006.01)

(21) Application number: **13876721.5**

(22) Date of filing: **09.10.2013**

(86) International application number:
**PCT/JP2013/077436**

(87) International publication number:
**WO 2014/132479 (04.09.2014 Gazette 2014/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **28.02.2013   JP 2013039797**

(71) Applicant: **Nitto Denko Corporation
Ibaraki-shi, Osaka 567-8680 (JP)**

(72) Inventors:
• **HATANAKA, Takezo
Ibaraki-shi
Osaka 567-8680 (JP)**
• **TSUDA, Hisashi
Ibaraki-shi
Osaka 567-8680 (JP)**

(74) Representative: **Müller-Boré & Partner
Patentanwälte PartG mbB
Friedenheimer Brücke 21
80639 München (DE)**

(54) **WIRELESS POWER TRANSMISSION APPARATUS, SUPPLY POWER CONTROL METHOD FOR WIRELESS POWER TRANSMISSION APPARATUS, AND MANUFACTURING METHOD FOR WIRELESS POWER TRANSMISSION APPARATUS**

(57)    Provided are: a wireless power transmission apparatus with which an input impedance value is set by adjusting coupling coefficients between coils provided to a power supply device that wirelessly transmits power and a power receiving device, without adding new equipment, thereby enabling the power (the current) to be supplied to be controlled; a supply power control method; and a manufacturing method for the wireless power transmission apparatus. The supply power control method for the wireless power transmission apparatus (1), wherein power is supplied from a power supply module (2) to a power receiving module (3) by altering a magnetic field, involves adjusting coupling coefficient values between adjacent coils so as to set an input impedance (Zin) value of the wireless power transmission apparatus (1) to a desired value, and adjust the power to be supplied.

FIG.12

## Description

### TECHNICAL FIELD

The present invention relates to a wireless power transmission apparatus capable of adjusting power to be supplied by means of wireless power transmission, and a supply power control method and a manufacturing method for the wireless power transmission apparatus.

### BACKGROUND ART

Portable electronic devices such as laptop PCs, tablet PCs, digital cameras, mobile phones, portable gaming devices, earphone-type music players, RF headsets, hearing aids, recorders, which are portable while being used by the user are rapidly increasing in recent years. Many of these portable electronic devices have therein a rechargeable battery, which requires periodical charging. To facilitate the work for charging the rechargeable battery of an electronic device, there are an increasing number of devices for charging rechargeable batteries by using a power-supplying technology (wireless power transmission technology performing power transmission by varying the magnetic field) that performs wireless power transmission between a power-supplying device and a power-receiving device mounted in an electronic device.

For example, as a wireless power transmission technology, there have been known, for example, a technology that performs power transmission by means of electromagnetic induction between coils (e.g. see PTL 1), a technology that performs power transmission by means of resonance phenomenon (magnetic field resonant state) between resonators (coils) provided to the power-supplying device and the power-receiving device (e.g. see PTL 2).

To stably charge a rechargeable battery by using such a wireless power transmission technology, the value of the power .(current) supplied to the rechargeable battery needs to be within a predetermined range. This is because, when the power (current) supplied to the rechargeable battery falls short of a value within the predetermined range, the power is a small power (small current) which is insufficient for charging the rechargeable battery due to the characteristics of the rechargeable battery. On the other hand, the power (current) supplied to the rechargeable battery exceeding a value within the predetermined range causes an overcurrent which leads to heat generation in the rechargeable battery and the charging circuit, consequently shortening the life of the rechargeable battery and the charging circuit.

A conceivable approach to meet the above-described requirement is to control the power (current) to be supplied to the rechargeable battery so it is within a predetermined range of values by controlling the input impedance in a power-supplying device and a power-receiving device in which wireless power transmission takes place.

To control the input impedance of the power-supplying device and the power-receiving device in which wireless power transmission takes place, it is conceivable to provide the power-receiving device with an impedance matching box separately (e.g., see PTL 3).

### Citation List

### Patent Literature

PTL 1: Japanese patent No. 4624768
PTL 2: Japanese Unexamined Patent Publication No. 239769/2010
PTL 3: Japanese Unexamined Patent Publication No. 050140/2011

### SUMMARY OF THE INVENTION

### Technical Problem

However, separately providing an impedance matching box to a power- receiving device and the like causes an increase in the number of components, and is inconvenient in portable electronic devices for which portability, compactness, and cost-efficiency are required.

In other words, it is preferable that controlling of the input impedance is possible without an additional device to the power-supplying device and the power-receiving device which perform wireless power transmission.

In view of the above, an object of the present invention is to provide a wireless power transmission apparatus in which its input impedance is adjustable by means of adjustment of the coupling coefficient between coils provided in a power-supplying device and a power-receiving device which perform wireless power transmission, thereby enabling control of power (current) supplied, without a need of an additional device, and to provide a supply power control method and manufacturing method for such a wireless power transmission apparatus.

TECHNICAL SOLUTION

An aspect of the present invention to achieve the above object is a supply power control method for a wireless power transmission apparatus configured to supply power from a power-supplying module comprising at least one of a power-supplying coil and a power-supplying resonator to a power-receiving module comprising at least one of a power-receiving resonator and a power-receiving coil, while varying a magnetic field, wherein: the power-supplying coil, the power-supplying resonator, the power-receiving resonator, and the power-receiving coil each has at least one coil; and power to be supplied is adjusted by setting an input impedance of the wireless power transmission apparatus, by means of adjusting a value of coupling coefficient between coils next to each other.

With the above method, the power to be supplied is adjustable by setting an input impedance of the wireless power transmission apparatus, by means of adjusting a value of coupling coefficient between coils next to each other, in the power-supplying coil, the power-supplying resonator, the power-receiving resonator, and the power-receiving coil. This way, by setting the value of the input impedance of the wireless power transmission apparatus, the power to be supplied at the time of wireless power transmission is adjustable without a need of an additional device. In other words, control of power to be supplied is possible without a need of an additional component in the wireless power transmission apparatus.

Another aspect of the present invention to achieve the above object is a supply power control method for a wireless power transmission apparatus configured to supply power from a power-supplying module comprising at least a power-supplying coil and a power-supplying resonator to a power-receiving module comprising at least a power-receiving resonator and a power-receiving coil, by means of a resonance phenomenon, wherein the input impedance of the wireless power transmission apparatus is adjusted by adjusting at least one of a coupling coefficient $k_{12}$ between the power-supplying coil and the power-supplying resonator, a coupling coefficient $k_{23}$ between the power-supplying resonator and the power-receiving resonator, and a coupling coefficient $k_{34}$ between the power-receiving resonator and the power-receiving coil.

The above method enables setting of input impedance of the wireless power transmission apparatus, by adjusting the coupling coefficient $k_{12}$ between the power-supplying coil and the power-supplying resonator, the coupling coefficient $k_{23}$ between the power-supplying resonator and the power-receiving resonator, and the coupling coefficient $k_{34}$ between the power-receiving resonator and the power-receiving coil, thereby enabling control of the supplied power in the wireless power transmission apparatus configured to supply power by means of resonance phenomenon from the power-supplying module to the power-receiving module.

Another aspect of the present invention to achieve the above object is a supply power control method for a wireless power transmission apparatus, adapted so that the values of the coupling coefficients $k_{12}$, $k_{23}$, and $k_{34}$ are adjusted by varying at least one of a distance between the power-supplying coil and the power-supplying resonator, a distance between the power-supplying resonator and the power-receiving resonator, and a distance between power-receiving resonator and the power-receiving coil.

With the above method, the value of the coupling coefficient $k_{12}$ is varied by varying the distance between the power-supplying coil and the power-supplying resonator, the value of the coupling coefficient $k_{23}$ is varied by varying the distance between the power-supplying resonator and the power-receiving resonator, and the value of the coupling coefficient $k_{34}$ is varied by varying the distance between the power-receiving resonator and the power-receiving coil. Thus, it is possible to vary the values of coupling coefficients between coils, simply by physically varying the distance between the power-supplying coil and the power-supplying resonator, the distance between the power-supplying resonator and the power-receiving resonator, and the distance between the power-receiving resonator and the power-receiving coil. In other words, it is possible to adjust the input impedance in a wireless power transmission apparatus thereby enabling control of the power output from the wireless power transmission apparatus, simply by physically varying the distance between the power-supplying coil and the power-supplying resonator, the distance between the power-supplying resonator and the power-receiving resonator, and the distance between the power-receiving resonator and the power-receiving coil.

Another aspect of the present invention to achieve the above object is a supply power control method for a wireless power transmission apparatus, wherein the adjustment is based on a characteristic such that, if the distance between the power-supplying resonator and the power-receiving resonator, and the distance between the power-receiving resonator and the power-receiving coil are fixed, the power supplied by the resonance phenomenon is such that, the value of the coupling coefficient $k_{12}$ between the power-supplying coil and the power-supplying resonator increases with a decrease in the distance between the power-supplying coil and the power-supplying resonator, and the value of the input impedance of the wireless power transmission apparatus increases with the increase in the value of the coupling coefficient $k_{12}$.

With the above method, if the distance between the power-supplying resonator and the power-receiving resonator and the distance between the power-receiving resonator and the power-receiving coil are fixed, the value of the coupling coefficient $k_{12}$ between the power-supplying coil and the power-receiving resonator is increased with a decrease in the distance between the power-supplying coil and the power-supplying resonator. Increasing the value of the coupling coefficient $k_{12}$ raises the value of the input impedance in the wireless power transmission apparatus. To the contrary, by increasing the distance between the power-supplying coil and the power-supplying resonator, the value of the coupling coefficient $k_{12}$ between the power-supplying coil and the power-supplying resonator is reduced. Reduction of the value of the coupling coefficient $k_{12}$ reduces the value of the input impedance in the wireless power transmission apparatus. In other words, the above described supply power control method for a wireless power transmission apparatus, utilizing the above described characteristic enables adjustment of the input impedance in a wireless power transmission apparatus thereby enabling control of the power output from the wireless power transmission apparatus, simply by physically varying the distance between the power-supplying coil and the power-supplying resonator.

Another aspect of the present invention to achieve the above object is a supply power control method for a wireless power transmission apparatus, wherein the adjustment is based on a characteristic such that, if the distance between the power-supplying coil and the power-supplying resonator, and the distance between the power-supplying resonator and the power-receiving resonator are fixed, the power supplied by the resonance phenomenon is such that, the value of the coupling coefficient $k_{34}$ between the power-receiving resonator and the power-receiving coil increases with a decrease in the distance between the power-receiving resonator and the power-receiving coil, and the value of the input impedance of the wireless power transmission apparatus decreases with the increase in the value of the coupling coefficient $k_{34}$.

With the above method, if the distance between the power-supplying coil and the power-supplying resonator and the distance between the power-supplying resonator and the power-receiving resonator are fixed, the value of the coupling coefficient $k_{34}$ between the power-receiving resonator and the power-receiving coil is increased with a decrease in the distance between the power-receiving resonator and the power-receiving coil. Increasing the value of the coupling coefficient $k_{34}$ reduces the value of the input impedance in the wireless power transmission apparatus. To the contrary, by increasing the distance between the power-receiving resonator and the power-receiving coil, the value of the coupling coefficient $k_{34}$ between the power-receiving resonator and the power-receiving coil is reduced. Reduction of the value of the coupling coefficient $k_{34}$ raises the value of the input impedance in the wireless power transmission apparatus. In other words, the above described supply power control method for a wireless power transmission apparatus, utilizing the above described characteristic enables adjustment of the input impedance in a wireless power transmission apparatus thereby enabling control of the power output from the wireless power transmission apparatus, simply by physically varying the distance between the power-receiving resonator and the power-receiving coil.

Another aspect of the present invention to achieve the above object is a supply power control method for a wireless power transmission apparatus, wherein a transmission characteristic with respect to a driving frequency of the power supplied to the power-supplying module has a peak occurring in a drive frequency band lower than a resonance frequency of the power-supplying module and the power-receiving module, and in a drive frequency band higher than the resonance frequency, and the driving frequency of the power supplied to the power-supplying module is in a band corresponding to a peak value of the transmission characteristic occurring in a driving frequency band lower than the resonance frequency.

With the method described above, when the transmission characteristic with respect to a driving frequency of the power supplied to the power-supplying module is set so as to have a peak occurring in a drive frequency band lower than a resonance frequency of the power-supplying module and the power-receiving module, and in a drive frequency band higher than the resonance frequency, a relatively high transmission characteristic is ensured by setting the driving frequency of the power supplied to the power-supplying module in a band corresponding to a peak value of the transmission characteristic occurring in a driving frequency band lower than the resonance frequency.

By setting the power-source frequency of the power source to a frequency on the low frequency side, the current in the power-supplying resonator and the current in the power-receiving resonator flow in the same direction. With this, as the magnetic field occurring on the outer circumference side of the power-supplying module and the magnetic field occurring on the outer circumference side of the power-receiving module cancel each other out, the influence of the magnetic fields on the outer circumference sides of the power-supplying module and the power-receiving module is restrained, and the magnetic field space having a smaller magnetic field strength than a magnetic field strength in positions other than the outer circumference sides of the power-supplying module and the power-receiving module is formed. By placing, within the magnetic field space, circuits and the like which should be away from the influence of the magnetic field, it is possible to efficiently utilize a space, and downsize the wireless power transmission apparatus itself.

Another aspect of the present invention to achieve the above object is a supply power control method for a wireless power transmission apparatus, adapted so that, a transmission characteristic with respect to a driving frequency of the power supplied to the power-supplying module has a peak occurring in a drive frequency band lower than a resonance frequency of the power-supplying module and the power-receiving module, and in a drive frequency band higher than the resonance frequency, and the driving frequency of the power supplied to the power-supplying module is in a band corresponding to a peak value of the transmission characteristic occurring in a driving frequency band higher than the resonance frequency.

With the method described above, when the transmission characteristic with respect to a driving frequency of the power supplied to the power-supplying module is set so as to have a peak occurring in a drive frequency band lower than a resonance frequency of the power-supplying module and the power-receiving module, and in a drive frequency band higher than the resonance frequency, a relatively high transmission characteristic is ensured by setting the driving frequency of the power supplied to the power-supplying module in a band corresponding to a peak value of the transmission characteristic occurring in a driving frequency band higher than the resonance frequency.

Further, as the magnetic field occurring on the inner circumference side of the power-supplying module and the magnetic field occurring on the inner circumference side of the power-receiving module cancel each other out, the influence of the magnetic fields on the inner circumference sides of the power-supplying module and the power-receiving module is restrained, and the magnetic field space having a smaller magnetic field strength than a magnetic field strength in positions other than the inner circumference sides of the power-supplying module and the power-receiving module is formed. By placing, within the magnetic field space, circuits and the like which should be away from the influence of the magnetic field, it is possible to efficiently utilize a space, and downsize the wireless power transmission apparatus itself.

Another aspect of the present invention is a wireless power transmission apparatus adjusted by the above-described supply power control method for a wireless power transmission apparatus.

With the above structure, by setting the value of the input impedance of the wireless power transmission apparatus, the power to be supplied at the time of wireless power transmission is adjustable without a need of an additional device. In other words, control of power to be supplied is possible without a need of an additional component in the wireless power transmission apparatus.

Another aspect of the present invention to achieve the above object is a manufacturing method for a wireless power transmission apparatus configured to supply power from a power-supplying module comprising at least one of a power-supplying coil and a power-supplying resonator to a power-receiving module comprising at least one of a power-receiving resonator and a power-receiving coil, while varying a magnetic field, comprising the steps of: providing at least one coil in each of the power-supplying coil, the power-supplying resonator, the power-receiving resonator, and the power-receiving coil; and adjusting power to be supplied by setting an input impedance of the wireless power transmission apparatus, by means of adjusting a value of coupling coefficient between coils next to each other.

The above method enables manufacturing of a wireless power transmission apparatus in which the power to be supplied at the time of wireless power transmission is adjustable without a need of an additional device, by setting the value of the input impedance of the wireless power transmission apparatus. In other words, manufacturing of a wireless power transmission apparatus capable of controlling power to be supplied is possible without a need of an additional component in the wireless power transmission apparatus.

ADVANTAGEOUS EFFECTS

There is provided a wireless power transmission apparatus in which its input impedance is adjustable by means of adjustment of the coupling coefficient between coils provided in a power-supplying device and a power-receiving device which perform wireless power transmission, thereby enabling control of power (current) supplied, without a need of an additional device, and to provide a supply power control method and manufacturing method for such a wireless power transmission apparatus.

DESCRIPTION OF THE DRAWINGS

[FIG. 1] FIG. 1 is a schematic explanatory diagram of a wireless power transmission apparatus.
[FIG. 2] FIG. 2 is an explanatory diagram of a proper current range.
[FIG. 3] FIG. 3 is an explanatory diagram of an equivalent circuit of the wireless power transmission apparatus.
[FIG. 4] FIG. 4 is an explanatory diagram indicating relation of transmission characteristic "S21" to a driving frequency.
[FIG. 5] FIG. 5 is a graph showing measurement results related to Measurement Experiment 1.
[FIG. 6] FIG. 6 is a graph showing measurement results related to Measurement Experiment 2.
[FIG. 7] FIG. 7 is a graph showing measurement results related to Measurement Experiment 3.
[FIG. 8] FIG. 8 is a graph showing measurement results related to Measurement Experiment 4.
[FIG. 9] FIG. 9 is a graph showing measurement results related to Measurement Experiment 5.
[FIG. 10] FIG. 10 is a graph showing measurement results related to Measurement Experiment 6.
[FIG. 11] FIG. 11 is a graph showing a relationship between an inter coil distance and a coupling coefficient, in the wireless power transmission.

[FIG. 12] FIG. 12 is an explanatory diagram of a manufacturing method of a wireless power transmission apparatus.

[FIG. 13] FIG. 13 is a flowchart explaining a method for designing an RF headset and a charger, including the wireless power transmission apparatus.

DESCRIPTION OF EMBODIMENTS

The following describes an embodiment of a wireless power transmission apparatus, a supply power control method and a manufacturing method for the wireless power transmission apparatus related to the present invention.

(Embodiment)

First, the following describes a wireless power transmission apparatus 1 designed and manufactured by the supply power control method and the manufacturing method, before describing the supply power control method and the manufacturing method themselves for the wireless power transmission apparatus.

(Structure of Wireless Power Transmission Apparatus 1)

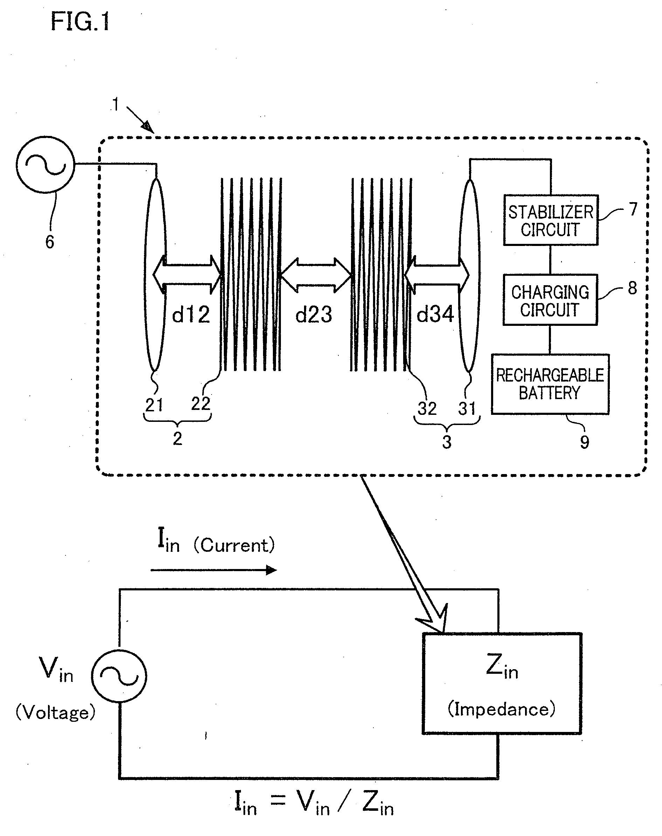

The wireless power transmission apparatus 1 includes a power-supplying module 2 having a power-supplying coil 21 and a power-supplying resonator 22 and a power-receiving module 3 having a power-receiving coil 31 and the power-receiving resonator 32, as shown in FIG. 1. The power-supplying coil 21 of the power-supplying module 2 is connected to an AC power source 6 having an oscillation circuit configured to set the driving frequency of power supplied to the power-supplying module 2 to a predetermined value. The power-receiving coil 31 of the power-receiving module 3 is connected to a rechargeable battery 9 via a stabilizer circuit 7 configured to rectify the AC power received, and a charging circuit 8 configured to prevent overcharge.

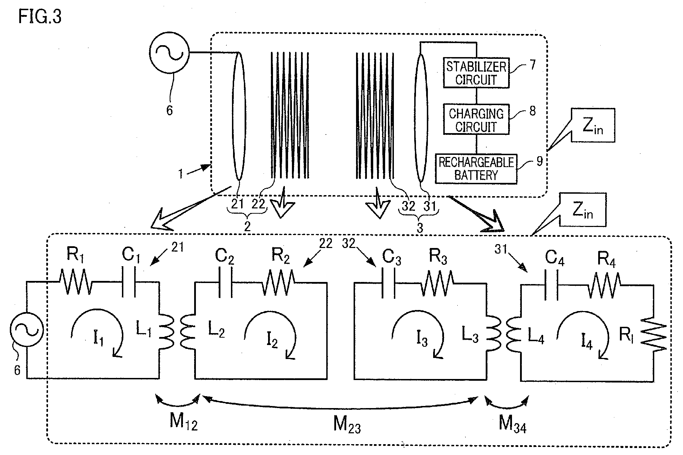

The power-supplying coil 21 plays a role of supplying power obtained from the AC power source 6 to the power-supplying resonator 22 by means of electromagnetic induction. As shown in FIG. 3, the power-supplying coil 21 is constituted by an RLC circuit whose elements include a resistor $R_1$, a coil $L_1$, and a capacitor $C_1$. The coil $L_1$ is a single-turn coil of a copper wire material (coated by an insulation film) with its coil diameter set to 96mmφ. The total impedance of a circuit element constituting the power-supplying coil 21 is $Z_1$. In the present embodiment, the $Z_1$ is the total impedance of the RLC circuit (circuit element) constituting the power-supplying coil 21, which includes the resistor $R_1$, the coil $L_1$, and the capacitor $C_1$.

The power-receiving coil 31 plays roles of receiving the power having been transmitted as a magnetic field energy from the power-supplying resonator 22 to the power-receiving resonator 32, by means of electromagnetic induction, and supplying the power received to the rechargeable battery 9 via the stabilizer circuit 7 and the charging circuit 8. As shown in FIG. 3, the power-receiving coil 31, similarly to the power-supplying coil 21, is constituted by an RLC circuit whose elements include a resistor $R_4$, a coil $L_4$, and a capacitor $C_4$. The coil $L_4$ is a single-turn coil of a copper wire material (coated by an insulation film) with its coil diameter set to 96mmφ. The total impedance of a circuit element constituting the power-receiving coil 31 is $Z_4$. In the present embodiment, the $Z_4$ is the total impedance of the RLC circuit (circuit element) constituting the power-receiving coil 31, which includes the resistor $R_4$, the coil $L_4$, and the capacitor $C_4$. However, as shown in FIG. 3, the total load impedance $Z_1$ of the stabilizer circuit 7, the charging circuit 8, and the rechargeable battery 9 connected to the power-receiving coil 31 is implemented in the form of a resistor $R_L$ in the present embodiment for the sake of convenience.

As shown in FIG. 3, the power-supplying resonator 22 is constituted by an RLC circuit whose elements include a resistor $R_2$, a coil $L_2$, and a capacitor $C_2$. Further, as shown in FIG. 3, the power-receiving resonator 32 is constituted by an RLC circuit whose elements include a resistor $R_3$, a coil $L_3$, and a capacitor $C_3$. The power-supplying resonator 22 and the power-receiving resonator 32 each serves as a resonance circuit and plays a role of creating a magnetic field resonant state. The magnetic field resonant state (resonance phenomenon) here is a phenomenon in which two or more coils are tuned to a resonance frequency. The total impedance of a circuit element constituting the power-supplying resonator 22 is $Z_2$. In the present embodiment, the $Z_2$ is the total impedance of the RLC circuit (circuit element) constituting the power-supplying resonator 22, which includes the resistor $R_2$, the coil $L_2$, and the capacitor $C_2$. The total impedance of a circuit element constituting the power-receiving resonator 32 is $Z_3$. In the present embodiment, the $Z_3$ is the total impedance of the RLC circuit (circuit element) constituting the power-receiving resonator 32, which includes the resistor $R_3$, the coil $L_3$, and the capacitor $C_3$.

In the RLC circuit which is the resonance circuit in each of the power-supplying resonator 22 and the power-receiving resonator 32, the resonance frequency is f which is derived from (Formula 1) below, where the inductance is L and the capacity of capacitor is C. In the present embodiment, the resonance frequency of the power-supplying coil 21, the power-supplying resonator 22, the power-receiving coil 31, and the power-receiving resonator 32 is set to 12.8 MHz.
[Equation 1]

$$f = \frac{1}{2\pi\sqrt{LC}} \quad \ldots \quad \text{(Formula 1)}$$

The power-supplying resonator 22 and the power-receiving resonator 32 are each a 4-turn solenoid coil of a copper wire material (coated by insulation film), with its coil diameter being 96 mmφ. The resonance frequency of the power-supplying resonator 22 and that of the power-receiving resonator 32 are matched with each other. The power-supplying resonator 22 and the power-receiving resonator 32 may be a spiral coil or a solenoid coil as long as it is a resonator using a coil.

In regard to the above, the distance between the power-supplying coil 21 and the power-supplying resonator 22 is denoted as d12, the distance between the power-supplying resonator 22 and the power-receiving resonator 32 is denoted as d23, and the distance between the power-receiving resonator 32 and the power-receiving coil 31 is denoted as d34 (see FIG. 1).

Further, as shown in FIG. 3, a mutual inductance between the coil $L_1$ of the power-supplying coil 21 and the coil $L_2$ of the power-supplying resonator 22 is $M_{12}$, a mutual inductance between the coil $L_2$ of the power-supplying resonator 22 and the coil $L_3$ of the power-receiving resonator 32 is $M_{23}$, and a mutual inductance between the coil $L_3$ of the power-receiving resonator 32 and the coil $L_4$ of the power-receiving coil 31 is $M_{34}$. Further, in regard to the wireless power transmission apparatus 1, a coupling coefficient between the coil $L_1$ and the coil $L_2$ is denoted as $K_{12}$, a coupling coefficient between the coil $L_2$ and the coil $L_3$ is denoted as $K_{23}$, a coupling coefficient between the coil $L_3$ and the coil $L_4$ is denoted as $K_{34}$.

The resistance values, inductances, capacities of capacitors, and coupling coefficients $K_{12}$, $K_{23}$, and $K_{34}$ of $R_1$, $L_1$, and $C_1$ of the RLC circuit of the power-supplying coil 21, $R_2$, $L_2$, and $C_2$ of the RLC circuit of the power-supplying resonator 22, $R_3$, $L_3$, and $C_3$ of the RLC circuit of the power-receiving resonator 32, and $R_4$, $L_4$, and $C_4$ of the RLC circuit of the power-receiving coil 31 are parameters variable at the stage of designing and manufacturing, and are preferably set so as to satisfy the relational expression of (Formula 3) which is described later.

With the wireless power transmission apparatus 1, when the resonance frequency of the power-supplying resonator 22 and the resonance frequency of the power-receiving resonator 32 match with each other, a magnetic field resonant state is created between the power-supplying resonator 22 and the power-receiving resonator 32. When a magnetic field resonant state is created between the power-supplying resonator 22 and the power-receiving resonator 32 by having these resonators resonating with each other, power is transmitted from the power-supplying resonator 22 to the power-receiving resonator 32 as magnetic field energy.

(Supply Power Control Method)

The following describes a supply power control method for adjusting the power supplied from the wireless power transmission apparatus 1, based on the structure of the wireless power transmission apparatus 1.

FIG. 1 shows at its bottom a circuit diagram of the wireless power transmission apparatus 1 (including: the stabilizer circuit 7, the charging circuit 8, and the rechargeable battery 9) having the structure as described above. In the figure, the entire wireless power transmission apparatus 1 is shown as single input impedance $Z_{in}$. When the AC power source 6 generally used is a constant voltage power source, the voltage Vin is kept constant. Therefore, to control the power output from the wireless power transmission apparatus 1, there is a need of controlling the current $I_{in}$.

The (Formula 2) is a relational expression of the current $I_{in}$, based on the voltage Vin and input impedance $Z_{in}$.
[Equation 2]

$$I_{in} = \frac{V_{in}}{Z_{in}} \quad \ldots \quad \text{(Formula 2)}$$

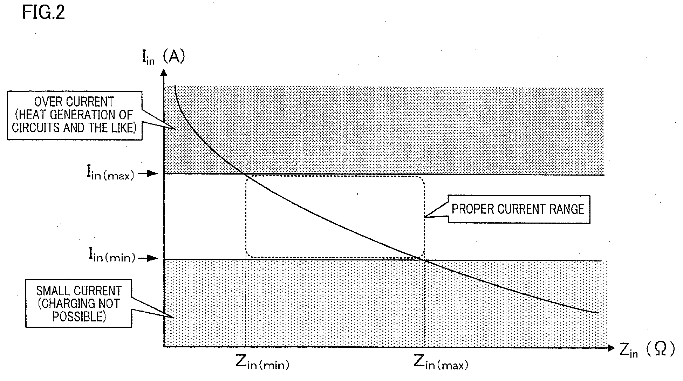

When supplying power from the wireless power transmission apparatus 1 of the present embodiment to the rechargeable battery 9, the value of the current $I_{in}$ needs to be within a proper current range ($I_{in(MIN)}$ to $I_{in(max)}$), as shown in FIG. 2. The current $I_{in}$ needs to be a value within the proper current range because of the following reasons. The current supplied to the rechargeable battery 9 is a small current when the value thereof is smaller than the $I_{in(MIN)}$, and leads to a failure in charging the rechargeable battery 9, due to the characteristics of the rechargeable battery. On the other hand, the current supplied to the rechargeable battery 9 is an over current, when the value thereof is greater than the $I_{in(MAX)}$, which may lead to heat generation in the stabilizer circuit 7, charging circuit 8, and rechargeable battery 9, consequently shortening their lives. The over current may also lead to heat generation in the coils constituting the power-supplying module 2 and the power-receiving module 3 of the wireless power transmission apparatus 1, which may shortens the lives of the power source 6, the stabilizer circuit 7, the charging circuit 8, the rechargeable battery 9, and the like which are disposed close to the coils.

To control the current $I_{in}$ to be within the proper current range ($I_{in(MIN)}$ to $I_{in(max)}$) for the reasons stated above, the value of the input impedance $Z_{in}$ needs to be adjusted to be within a range of $Z_{in(MIN)}$ to $Z_{in(MAX)}$, as shown in FIG. 2. That is, as should be understood from (Formula 2), the value of the current $I_{in}$ is reduced by increasing the value of the input impedance $Z_{in}$, and the value of the current $I_{in}$ is increased by reducing the input impedance $Z_{in}$.

To be more specific about the input impedance $Z_{in}$ of the wireless power transmission apparatus 1, the structure of the wireless power transmission apparatus 1 is expressed in an equivalent circuit as shown in FIG. 3. Based on the equivalent circuit in FIG. 3, the input impedance $Z_{in}$ of the wireless power transmission apparatus 1 is expressed as the (Formula 3).

[Equation 3]

$$Z_{in} = Z_1 + \cfrac{(\omega M_{12})^2}{Z_2 + \cfrac{(\omega M_{23})^2}{Z_3 + \cfrac{(\omega M_{34})^2}{Z_4 + Z_l}}}$$

$$M_{12} = k_{12}\sqrt{L_1 L_2} \quad M_{23} = k_{23}\sqrt{L_2 L_3} \quad M_{34} = k_{34}\sqrt{L_3 L_4}$$

$$(K_{ij} \text{ is a coupling coefficient between } L_i \text{ and } L_j) \dots \text{ (Formula 3)}$$

Further, the impedance $Z_1$, $Z_2$, $Z_3$, $Z_4$, and $Z_1$ of the power-supplying coil 21, the power-supplying resonator 22, the power-receiving resonator 32, and the power-receiving coil 31 in the wireless power transmission apparatus 1 of the present embodiment are expressed as the (Formula 4).

[Equation 4]

$$Z_1 = R_1 + j\left(\omega L_1 - \frac{1}{\omega C_1}\right)$$

$$Z_2 = R_2 + j\left(\omega L_2 - \frac{1}{\omega C_2}\right)$$

$$Z_3 = R_3 + j\left(\omega L_3 - \frac{1}{\omega C_3}\right)$$

$$Z_4 = R_4 + j\left(\omega L_4 - \frac{1}{\omega C_4}\right)$$

$$Z_l = R_l$$

$$\dots \text{ (Formula 4)}$$

Introducing the (Formula 4) into the (Formula 3) makes the (Formula 5).

[Equation 5]

$$Z_{in} = R_1 + j\left(\omega L_1 - \frac{1}{\omega C_1}\right) + \cfrac{(\omega M_{12})^2}{R_2 + j\left(\omega L_2 - \frac{1}{\omega C_2}\right) + \cfrac{(\omega M_{23})^2}{R_3 + j\left(\omega L_3 - \frac{1}{\omega C_3}\right) + \cfrac{(\omega M_{34})^2}{R_4 + j\left(\omega L_4 - \frac{1}{\omega C_4}\right) + R_1}}}$$

..... (Formula 5)

The resistance values, inductances, capacities of capacitors, and coupling coefficients $K_{12}$, $K_{23}$, and $K_{34}$ of $R_1$, $L_1$, and $C_1$ of the RLC circuit of the power-supplying coil 21, $R_2$, $L_2$, and $C_2$ of the RLC circuit of the power-supplying resonator 22, $R_3$, $L_3$, and $C_3$ of the RLC circuit of the power-receiving resonator 32, $R_4$, $L_4$, and $C_4$ of the RLC circuit of the power-receiving coil 31 are used as parameters variable at the stage of designing and manufacturing, to adjust the value of the input impedance $Z_{in}$ of the wireless power transmission apparatus 1 derived from the above (Formula 5) to be within the range of $Z_{in(MIN)}$ to $Z_{in(MAX)}$.

(Control of Input Impedance $Z_{in}$ with Coupling Coefficients)

It is generally known that, in the above described wireless power transmission apparatus, the power transmission efficiency of the wireless power transmission is maximized by matching the driving frequency of the power supplied to the power-supplying module 2 to the resonance frequencies of the power-supplying coil 21 and the power-supplying resonator 22 of the power-supplying module 2 and the power-receiving coil 31 and the power-receiving resonator 32 of the power-receiving module 3. The driving frequency is therefore set to the resonance frequency generally to maximize the power transmission efficiency. It should be noted that the power transmission efficiency is a rate of power received by the power-receiving module 3, relative to the power supplied to the power-supplying module 2.
Thus, to maximize the power transmission efficiency in the wireless power transmission apparatus 1, it is necessary to satisfy capacity conditions and resonance conditions of the capacitors and coils ($\omega L = 1/\omega C$) so that the driving frequency matches with the resonance frequency of the RLC circuits of the power-supplying module 2 and the power-receiving module 3.
Specifically, when the input impedance $Z_{in}$ of the wireless power transmission apparatus 1 satisfying the resonance condition ($\omega L = 1/\omega C$) which maximizes the power transmission efficiency in the wireless power transmission apparatus 1 to the (Expression 5), the expression will be: ($\omega L_1 - 1/\omega C_1 = 0$), ($\omega L_2 - 1/\omega C_2 = 0$), ($\omega L_3 - 1/\omega C_3 = 0$), and ($\omega L_4 - 1/\omega C_4 = 0$), and the relational expression (Expression 6) is derived.
[Equation 6]

$$Z_{in} = R_1 + \cfrac{(\omega M_{12})^2}{R_2 + \cfrac{(\omega M_{23})^2}{R_3 + \cfrac{(\omega M_{34})^2}{R_4 + R_1}}}$$

..... (Formula 6)

From the above relational expression (Formula 6), it should be understood that the resistance values such as $R_1$ of the RLC circuit of the power-supplying coil 21, $R_2$ of the RLC circuit of the power-supplying resonator 22, $R_3$ of the RLC circuit of the power-receiving resonator 32, $R_4$ of the RLC circuit of the power-receiving coil 31, and the coupling coefficients $K_{12}$, $K_{23}$, and $K_{34}$ are only the main variable parameters to adjust the value of the input impedance $Z_{in}$ of the wireless power transmission apparatus 1 within the range of $Z_{in(MIN)}$ to $Z_{in(MAX)}$.
When the driving frequency of the power supplied to the power-supplying module 2 is matched with the resonance frequency to maximize the power transmission efficiency in the wireless power transmission apparatus 1, the coupling coefficients $k_{12}$, $k_{23}$, and $k_{34}$ are usable as the parameters for controlling the value of the input impedance $Z_{in}$ in the wireless power transmission apparatus 1 so that it is within the range of $Z_{in(MIN)}$ to $Z_{in(MAX)}$.
Further, as hereinabove described, when the driving frequency of the power supplied to the power-supplying module 2 is not matched with the resonance frequency of the power-supplying resonator 22 of the power-supplying module 2 and the power-receiving resonator 32 of the power-receiving module 3 ($\omega L \neq 1/\omega C$), the coupling coefficients $k_{12}$, $k_{23}$, and $k_{34}$ are usable as the parameters for controlling the value of the input impedance $Z_{in}$ in the wireless power transmission apparatus 1 so that it falls within the range Of $Z_{in(MIN)}$ to $Z_{in(MAX)}$.

(Variation in Input Impedance $Z_{in}$ due to Coupling Coefficients)

Next, with reference to measurement experiments 1 to 6, the following describes how the input impedance $Z_{in}$ of the wireless power transmission apparatus 1 varies, with variations in the coupling coefficients $k_{12}$, $k_{23}$, and $k_{34}$.

In the measurement experiments 1 to 6, the wireless power transmission apparatus 1 shown in FIG. 3 was connected to a network analyzer 110 (In the present embodiment, E5061B produced by Agilent Technologies, Inc. was used), and the value of the input impedance $Z_{in}$ relative to the coupling coefficient was measured. It should be noted that the measurements were conducted with a variable resistor 11 ($R_1$) substituting for the stabilizer circuit 7, the charging circuit 8, and the rechargeable battery 9, in the measurement experiments 1 to 6.

In the Measurement Experiments are used a wireless power transmission apparatus 1 with a double-hump transmission characteristic "S21" relative to the driving frequency of the power supplied to the wireless power transmission apparatus 1.

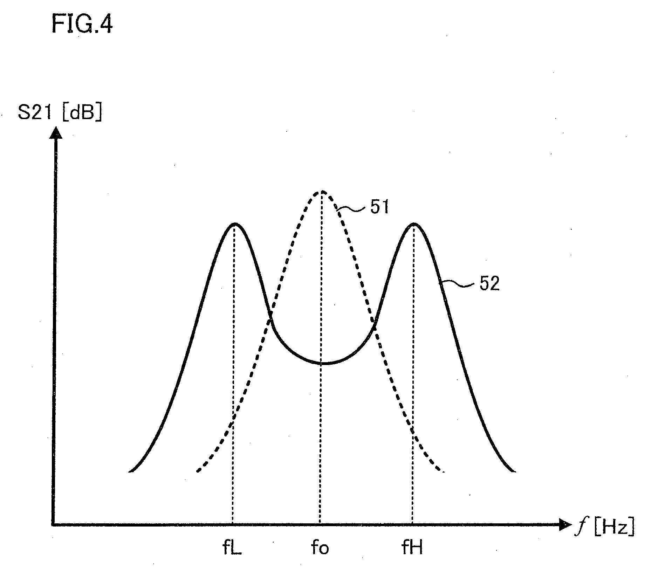

Transmission characteristic "S21" herein is a signal value measured by a network analyzer 110 connected to the wireless power transmission apparatus 1, and is indicated in decibel. The greater the value, the higher the power transmission efficiency. The transmission characteristic "S21" of the wireless power transmission apparatus 1 relative to the driving frequency of the power supplied to the wireless power transmission apparatus 1 may have either single-hump or double-hump characteristic, depending on the strength of coupling (magnetic coupling) by the magnetic field between the power-supplying module 2 and the power-receiving module 3. The single-hump characteristic means the transmission characteristic "S21" relative to the driving frequency has a single peak which occurs in the resonance frequency band (fo) (See dotted line 51 FIG. 4). The double-hump characteristic on the other hand means the transmission characteristic S21 relative to the driving frequency has two peaks, one of the peaks occurring in a drive frequency band lower than the resonance frequency (fL), and the other occurring in a drive frequency band higher than the resonance frequency (fH) (See solid line 52 in FIG. 4). The double-hump characteristic, to be more specific, means that the reflection characteristic "S11" measured with the network analyzer 110 connected to the wireless power transmission apparatus has two peaks. Therefore, even if the transmission characteristic S21 relative to the driving frequency appears to have a single peak, the transmission characteristic "S21" has a double-hump characteristic if the reflection characteristic S11 measured has two peaks.

In a wireless power transmission apparatus 1 having the single-hump characteristic, the transmission characteristic "S21" is maximized (power transmission efficiency is maximized) when the driving frequency is at the resonance frequency f0, as indicated by the dotted line 51 of FIG. 4.

On the other hand, in a wireless power transmission apparatus 1 having the double-hump characteristic, the transmission characteristic "S21" is maximized in a driving frequency band (fL) lower than the resonance frequency fo, and in a driving frequency band (fH) higher than the resonance frequency fo, as indicated by the solid line 52 of FIG. 4.

It should be noted that, in general, if the distance between the power-supplying resonator and the power-receiving resonator is the same, the maximum value of the transmission characteristic "S21" having the double-hump characteristic (the value of the transmission characteristic "S21" at fL or fH) is lower than the value of the maximum value of the transmission characteristic "S21" having the single-hump characteristic (value of the transmission characteristic "S21" at fo) (See graph in FIG. 4).

Specifically, in cases of double-hump characteristic, when the driving frequency of the AC power to the power-supplying module 2 is set to the frequency fL nearby the peak on the low frequency side (inphase resonance mode), the power-supplying resonator 22 and the power-receiving resonator 32 are resonant with each other in inphase, and the current in the power-supplying resonator 22 and the current in the power-receiving resonator 32 both flow in the same direction. As the result, as shown in the graph of FIG. 4, the value of the transmission characteristic S21 is made relatively high, even if the driving frequency does not match with the resonance frequency of the power-supplying resonator 22 of the power-supplying module 2 and the power-receiving resonator 32 of the power-receiving module 3, although the value still may not be as high as that of the transmission characteristic S21 in wireless power transmission apparatuses in general aiming at maximizing the power transmission efficiency (see dotted line 51). It should be noted that the resonance state in which the current in the coil (power-supplying resonator 22) of the power-supplying module 2 and the current in the coil (power-receiving resonator 32) of the power-receiving module 3 both flow in the same direction is referred to as inphase resonance mode.

Further, in the inphase resonance mode, because the magnetic field generated on the outer circumference side of the power-supplying resonator 22 and the magnetic field generated on the outer circumference side of the power-receiving resonator 32 cancel each other out, the magnetic field spaces each having a lower magnetic field strength than the magnetic field strengths in positions not on the outer circumference sides of the power-supplying resonator 22 and the power-receiving resonator 32 (e.g. , the magnetic field strengths on the inner circumference sides of the power-supplying resonator 22 and the power-receiving resonator 32) are formed on the outer circumference sides of the power-supplying resonator 22 and the power-receiving resonator 32, as the influence of the magnetic fields is lowered. When a stabilizer circuit 7, a charging circuit 8, a rechargeable battery 9, or the like desired to have less influence of the magnetic field is placed in this magnetic field space, occurrence of Eddy Current attributed to the magnetic field is restrained or prevented. This restrains negative effects due to generation of heat.

On the other hand, in cases of double-hump characteristic, when the driving frequency of the AC power to the power-supplying module 2 is set to the frequency fH nearby the peak on the side of the high frequency side (antiphase resonance mode), the power-supplying resonator 22 and the power-receiving resonator 32 resonate with each other in antiphase, and the current in the power-supplying resonator 22 and the current in the power-receiving resonator 32 flow opposite directions to each other. As the result, as shown in the graph of FIG. 4, the value of the transmission characteristic S21 is made relatively high, even if the driving frequency does not match with the resonance frequency of the power-supplying resonator 22 of the power-supplying module 2 and the power-receiving resonator 32 of the power-receiving module 3, although the value still may not be as high as that of the transmission characteristic S21 in wireless power transmission apparatuses in general aiming at maximizing the power transmission efficiency (see dotted line 51). The resonance state in which the current in the coil (power-supplying resonator 22) of the power-supplying module 2 and the current in the coil (power-receiving resonator 32) of the power-receiving module 3 flow opposite directions to each other is referred to as antiphase resonance mode.

Further, in the antiphase resonance mode, because the magnetic field generated on the inner circumference side of the power-supplying resonator 22 and the magnetic field generated on the inner circumference side of the power-receiving resonator 32 cancel each other out, the magnetic field spaces each having a lower magnetic field strength than the magnetic field strengths in positions not on the inner circumference side of the power-supplying resonator 22 and the power-receiving resonator 32 (e.g., the magnetic field strengths on the outer circumference side of the power-supplying resonator 22 and the power-receiving resonator 32) are formed on the outer circumference sides of the power-supplying resonator 22 and the power-receiving resonator 32, as the influence of the magnetic fields is lowered. When a stabilizer circuit 7, a charging circuit 8, a rechargeable battery 9, and the like desired to have less influence of the magnetic field is placed in this magnetic field space, occurrence of Eddy Current attributed to the magnetic field is restrained or prevented. This restrains negative effects due to generation of heat. Further, since the magnetic field space formed in this antiphase resonance mode is formed on the inner circumference side of the power-supplying resonator 22 and the power-receiving resonator 32, assembling the electronic components such as the stabilizer circuit 7, the charging circuit 8, the rechargeable battery 9, and the like within this space makes the wireless power transmission apparatus 1 itself more compact, and improves the freedom in designing.

(Measurement Experiment 1: Variation in Input Impedance $Z_{in}$ when Coupling Coefficient $k_{12}$ is Varied)

In the wireless power transmission apparatus 1 used in the measurement experiment 1, the power-supplying coil 21 is constituted by an RL circuit (non-resonating) including a resistor $R_1$ and a coil $L_1$. The coil $L_1$ is a single-turn coil of a copper wire material (coated by an insulation film) with its coil diameter set to 96 mm$\phi$. Similarly, the power-receiving coil 31 constitutes an RL circuit (non-resonating) including a resistor $R_4$ and a coil $L_4$. The coil $L_4$ is a single-turn coil of a copper wire material (coated by an insulation film) with its coil diameter set to 96 mm$\phi$. Further, the power-supplying resonator 22 is constituted by an RLC circuit including a resistor $R_2$, a coil $L_2$, and a capacitor $C_2$, and adopts a 4-turn solenoid coil of a copper wire material (coated by an insulation film) with its diameter set to 96 mm$\phi$. Further, the power-receiving resonator 32 is constituted by an RLC circuit including a resistor $R_3$, a coil $L_3$, and a capacitor $C_3$, and adopts a 4-turn solenoid coil of a copper wire material (coated by an insulation film) with its diameter set to 96 mm$\phi$. The values of $R_1$, $R_2$, $R_3$, $R_4$ in the wireless power transmission apparatus 1 used in Measurement Experiment 1 were set to 0.05$\Omega$, 0.5$\Omega$, 0.5$\Omega$, and 0.05$\Omega$, respectively. Further, the values of $L_1$, $L_2$, $L_3$, $L_4$ were set to 0.3 $\mu$H, 4 $\mu$H, 4 $\mu$H, and 0.3 $\mu$H, respectively. The resonance frequency of the power-supplying resonator 22 and that of the power-receiving resonator 32 was 12.8 MHz.

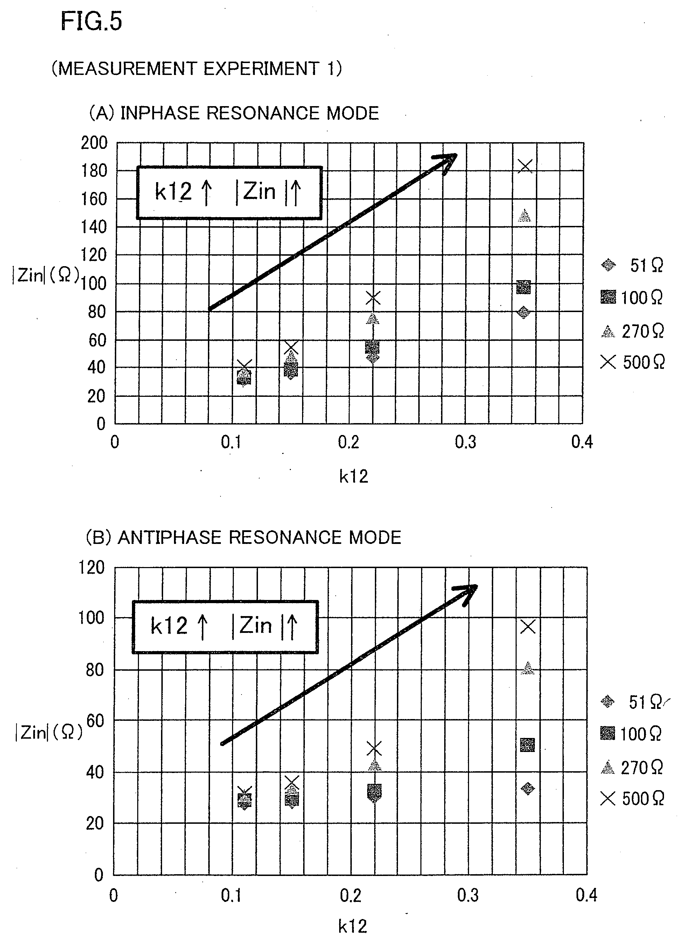

In the measurement experiment 1, the coupling coefficients $k_{23}$ and $k_{34}$ were fixed to 0.10 and 0.35, respectively, and while the value of the coupling coefficient $k_{12}$ was changed among four values, i.e., 0.11 $\Omega$, 0.15 $\Omega$, 0.22 $\Omega$, and 0.35 $\Omega$, the value of the input impedance $Z_{in}$ of the wireless power transmission apparatus 1 with respect to the driving frequencies of the power supplied to the power-supplying module 2 was measured for four values of the variable resistor 11 ($R_1$), i.e., 51 $\Omega$, 100 $\Omega$, 270 $\Omega$, and 500 $\Omega$ (the method of adjusting the coupling coefficient is detailed later) . FIG. 5 (A) shows values resulting from measurements with the driving frequency of the AC power to the power-supplying module 2 set to the frequency fL nearby the peak on the low frequency side of the double-hump characteristic (inphase resonance mode: 12.2 MHz) . FIG. 5 (B) shows values resulting from measurements with the driving frequency of the AC power to the power-supplying module 2 set to the frequency fH nearby the peak on the high frequency side of the double-hump characteristic (antiphase resonance mode: 13.4 MHz).

As should be seen in the measurement results in the inphase resonance mode shown in FIG. 5 (A), when the value of the variable resistor 11 ($R_1$) is set to 51 $\Omega$ and when the value of the coupling coefficient $k_{12}$ is raised in the sequence of 0.11 → 0.15 → 0.22 → 0.35, the value of the input impedance $Z_{in}$ of the wireless power transmission apparatus 1 rose as follows: 31.4 Q → 35.9 $\Omega$ → 47.5 $\Omega$ → 79.0 $\Omega$.

Further, when the value of the variable resistor 11 ($R_1$) is set to 100 $\Omega$ and when the value of the coupling coefficient $k_{12}$ is raised in the sequence of 0.11 → 0.15 → 0.22 → 0.35, the value of the input impedance $Z_{in}$ of the wireless power transmission apparatus 1 rose as follows: 33.1 $\Omega$ → 39.0 $\Omega$ → 54.8 $\Omega$ → 97.1 $\Omega$.

Further, when the value of the variable resistor 11 ($R_1$) is set to 270 $\Omega$ and when the value of the coupling coefficient $k_{12}$ is raised in the sequence of 0.11 --> 0.15 --> 0.22 --> 0.35, the value of the input impedance $Z_{in}$ of the wireless power transmission apparatus 1 rose as follows: 37.8 $\Omega$ → 48.2 $\Omega$ → 76.0 $\Omega$ → 148.5 $\Omega$.

Further, when the value of the variable resistor 11 ($R_1$) is set to 500 $\Omega$ and when the value of the coupling coefficient $k_{12}$ is raised in the sequence of 0.11 → 0.15 → 0.22 → 0.35, the value of the input impedance $Z_{in}$ of the wireless power transmission apparatus 1 rose as follows: 40.9 $\Omega$ → 54.5 $\Omega$ → 90.1 $\Omega$ → 183.1 $\Omega$.

As should be understood from the above, in the inphase resonance mode, the value of the input impedance $Z_{in}$ of the wireless power transmission apparatus 1 tends to rise with an increase in the coupling coefficient $k_{12}$ in a sequence of 0.11 → 0.15 → 0.22 → 0.35, when the value of the variable resistor 11 ($R_1$) is set to any of the following values 51 $\Omega$, 100 $\Omega$, 270 $\Omega$, or 500 $\Omega$.

Similarly, as should be seen in the measurement results in the antiphase resonance mode shown in FIG. 5 (B), when the value of the variable resistor 11 ($R_1$) is set to 51 $\Omega$ and when the value of the coupling coefficient $k_{12}$ is raised in the sequence of 0.11 → 0.15 → 0.22 → 0.35, the value of the input impedance $Z_{in}$ of the wireless power transmission apparatus 1 rose as follows: 27.5 $\Omega$ → 28.1 $\Omega$ → 30.2 $\Omega$ → 33.3 $\Omega$.

Further, when the value of the variable resistor 11 ($R_1$) is set to 100 $\Omega$ and when the value of the coupling coefficient $k_{12}$ is raised in the sequence of 0.11 → 0.15 → 0.22 → 0.35, the value of the input impedance $Z_{in}$ of the wireless power transmission apparatus 1 rose as follows: 28.7 $\Omega$ → 29.4 $\Omega$ → 32.6 $\Omega$ → 50.3 $\Omega$.

Further, when the value of the variable resistor 11 ($R_1$) is set to 270 $\Omega$ and when the value of the coupling coefficient $k_{12}$ is raised in the sequence of 0.11 → 0.15 → 0.22 → 0.35, the value of the input impedance $Z_{in}$ of the wireless power transmission apparatus 1 rose as follows: 30.7 $\Omega$ → 33.5 $\Omega$ → 43.0 $\Omega$ → 80.6 $\Omega$.

Further, when the value of the variable resistor 11 ($R_1$) is set to 500 $\Omega$ and when the value of the coupling coefficient $k_{12}$ is raised in the sequence of 0.11 → 0.15 → 0.22 → 0.35, the value of the input impedance $Z_{in}$ of the wireless power transmission apparatus 1 rose as follows: 31.8 $\Omega$ → 35.8 $\Omega$ → 49.1 $\Omega$ → 96.7 $\Omega$.

As should be understood from the above, in the antiphase resonance mode, the value of the input impedance $Z_{in}$ of the wireless power transmission apparatus 1 tends to rise with an increase in the coupling coefficient $k_{12}$ in a sequence of 0.11 → 0.15 → 0.22 --> 0.35, when the value of the variable resistor 11 ($R_1$) is set to any of the following values 51 $\Omega$, 100 $\Omega$, 270 $\Omega$, or 500 $\Omega$.

(Measurement Experiment 2: Variation in Input Impedance $Z_{in}$ when Coupling Coefficient $k_{12}$ is Varied)

In the wireless power transmission apparatus 1 used in the measurement experiment 2, unlike Measurement Experiment 1, the power-supplying coil 21 is constituted by an RLC circuit (resonating) including a resistor $R_1$, a coil $L_1$, and a capacitor $C_1$. The coil $L_1$ is a single-turn coil of a copper wire material (coated by an insulation film) with its coil diameter set to 96 mm$\phi$. Similarly, the power-receiving coil 31 is constituted by an RLC circuit whose elements include a resistor $R_4$, a coil $L_4$, and a capacitor $C_4$. The coil $L_4$ is a single-turn coil of a copper wire material (coated by insulation film) with its coil diameter set to 96 mm$\phi$. The other structures are the same as those in Measurement Experiment 1. The values of $R_1$, $R_2$, $R_3$, $R_4$ in the wireless power transmission apparatus 2 used in Measurement Experiment 2 were set to 0.05$\Omega$, 0.5$\Omega$, 0.5$\Omega$, and 0.05$\Omega$, respectively. Further, the values of $L_1$, $L_2$, $L_3$, $L_4$ were set to 0.3 $\mu$H, 4 $\mu$H, 4 $\mu$H, and 0.3 $\mu$H, respectively. The resonance frequency of the power-supplying coil 21, the power-supplying resonator 22, the power-receiving resonator 32, and the power-receiving coil 31 was 12.8 MHz.

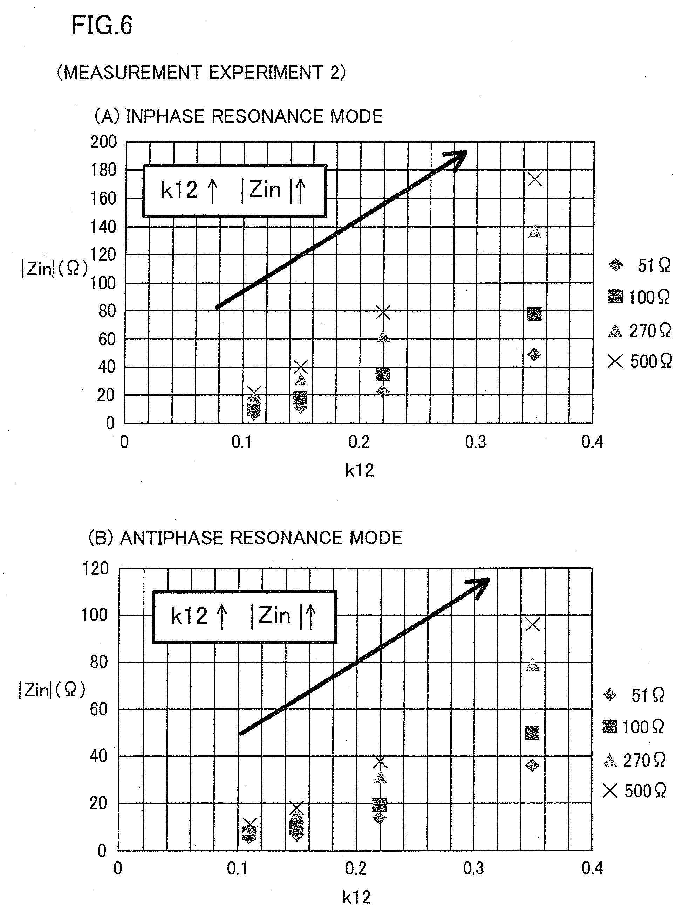

In the measurement experiment 2, the coupling coefficients $k_{23}$ and $k_{34}$ were fixed to 0.10 and 0.35, respectively, and while the value of the coupling coefficient $k_{12}$ was changed among four values, i.e., 0.11 $\Omega$, 0.15 $\Omega$, 0.22 $\Omega$, and 0.35 $\Omega$, the value of the input impedance $Z_{in}$ of the wireless power transmission apparatus 1 with respect to the driving frequencies of the power supplied to the power-supplying module 2 was measured for four values of the variable resistor 11 ($R_1$), i.e., 51 $\Omega$, 100 $\Omega$, 270 $\Omega$, and 500 $\Omega$. FIG. 6 (A) shows values resulting from measurements with the driving frequency of the AC power to the power-supplying module 2 set to the frequency fL nearby the peak on the low frequency side of the double-hump characteristic (inphase resonance mode: 12.2 MHz). FIG. 6 (B) shows values resulting from measurements with the driving frequency of the AC power to the power-supplying module 2 set to the frequency fH nearby the peak on the high frequency side of the double-hump characteristic (antiphase resonance mode: 13.4 MHz).

As should be seen in the measurement results in the inphase resonance mode shown in FIG. 6 (A), when the value of the variable resistor 11 ($R_1$) is set to 51 $\Omega$ and when the value of the coupling coefficient $k_{12}$ is raised in the sequence of 0.11 → 0.15 → 0.22 --> 0.35, the value of the input impedance $Z_{in}$ of the wireless power transmission apparatus 1 rose as follows: 6.5 $\Omega$ → 11.5 $\Omega$ → 22.4 $\Omega$ → 48.8 $\Omega$.

Further, when the value of the variable resistor 11 ($R_1$) is set to 100 $\Omega$ and when the value of the coupling coefficient $k_{12}$ is raised in the sequence of 0.11 → 0.15 → 0.22 → 0.35, the value of the input impedance $Z_{in}$ of the wireless power transmission apparatus 1 rose as follows: 10.0 $\Omega$ → 18.1 $\Omega$ → 35.4 $\Omega$ → 77.6 $\Omega$.

Further, when the value of the variable resistor 11 ($R_1$) is set to 270 $\Omega$ and when the value of the coupling coefficient $k_{12}$ is raised in the sequence of 0.11 → 0.15 → 0.22 → 0.35, the value of the input impedance $Z_{in}$ of the wireless power transmission apparatus 1 rose as follows: 17.3 $\Omega$ → 31.8 $\Omega$ → 62.2 $\Omega$ → 136.5 $\Omega$.

Further, when the value of the variable resistor 11 ($R_1$) is set to 500 $\Omega$ and when the value of the coupling coefficient $k_{12}$ is raised in the sequence of 0.11 → 0.15 → 0.22 → 0.35, the value of the input impedance $Z_{in}$ of the wireless power transmission apparatus 1 rose as follows: 21.8 $\Omega$ → 40.3 $\Omega$ → 79.0 $\Omega$ → 173.1 $\Omega$.

As should be understood from the above, in the inphase resonance mode, the value of the input impedance $Z_{in}$ of the wireless power transmission apparatus 1 tends to rise with an increase in the coupling coefficient $k_{12}$ in a sequence of 0.11 → 0.15 → 0.22 --> 0.35, when the value of the variable resistor 11 ($R_1$) is set to any of the following values 51 $\Omega$, 100 $\Omega$, 270 $\Omega$, or 500 $\Omega$.

Similarly, as should be seen in the measurement results in the antiphase resonance mode shown in FIG. 6 (B), when the value of the variable resistor 11 ($R_1$) is set to 51 $\Omega$ and when the value of the coupling coefficient $k_{12}$ is raised in the sequence of 0.11 → 0.15 → 0.22 → 0.35, the value of the input impedance $Z_{in}$ of the wireless power transmission apparatus 1 rose as follows: 5.5 $\Omega$ → 6.8 $\Omega$ → 13.6 $\Omega$ → 35.9 $\Omega$.

Further, when the value of the variable resistor 11 ($R_1$) is set to 100 $\Omega$ and when the value of the coupling coefficient $k_{12}$ is raised in the sequence of 0.11 → 0.15 → 0.22 → 0.35, the value of the input impedance $Z_{in}$ of the wireless power transmission apparatus 1 rose as follows: 6.9 Q → 9.5 $\Omega$ → 19.3 $\Omega$ → 49.8 $\Omega$.

Further, when the value of the variable resistor 11 ($R_1$) is set to 270 $\Omega$ and when the value of the coupling coefficient $k_{12}$ is raised in the sequence of 0.11 → 0.15 → 0.22 → 0.35, the value of the input impedance $Z_{in}$ of the wireless power transmission apparatus 1 rose as follows: 9.3 $\Omega$ → 14.9 $\Omega$ → 31.2 $\Omega$ → 79.0 $\Omega$.

Further, when the value of the variable resistor 11 ($R_1$) is set to 500 $\Omega$ and when the value of the coupling coefficient $k_{12}$ is raised in the sequence of 0.11 → 0.15 → 0.22 → 0.35, the value of the input impedance $Z_{in}$ of the wireless power transmission apparatus 1 rose as follows: 10.7 $\Omega$ → 18.0 $\Omega$ → 38.1 $\Omega$ → 95.9 $\Omega$.

As should be understood from the above, in the antiphase resonance mode, the value of the input impedance $Z_{in}$ of the wireless power transmission apparatus 1 tends to rise with an increase in the coupling coefficient $k_{12}$ in a sequence of 0.11 → 0.15 → 0.22 → 0.35, when the value of the variable resistor 11 ($R_1$) is set to any of the following values 51 $\Omega$, 100 $\Omega$, 270 $\Omega$, or 500 $\Omega$.

(Measurement Experiment 3: Variation in Input Impedance $Z_{in}$ when Coupling Coefficient $k_{12}$ is Varied)

The wireless power transmission apparatus 1 used in Measurement Experiment 3, unlike Measurement Experiments 1 and 2, adopts a pattern coil formed by winding a coil in a planer manner on coil parts of the power-supplying coil 21, the power-supplying resonator 22, the power-receiving resonator 32, and the power-receiving coil 31. Further, the power-supplying coil 21 is constituted by an RLC circuit (resonating) whose elements include a resistor $R_1$, a coil $L_1$, and a capacitor $C_1$. The coil $L_1$ is a 12-turn pattern coil with its coil diameter set to 35 mm$\phi$, which is formed by etching a copper foil. Further, the power-receiving coil 31 is constituted by an RLC circuit whose elements include a resistor $R_4$, a coil $L_4$, and a capacitor $C_4$. The coil $L_4$ is a 12-turn pattern coil with its coil diameter set to 35 mm$\phi$, which is formed by etching a copper foil. Further, the power-supplying resonator 22 is constituted by an RLC circuit whose elements include a resistor $R_2$, a coil $L_2$, and a capacitor $C_2$. The coil $L_2$ is a 12-turn pattern coil with its coil diameter set to 35 mm$\phi$, which is formed by etching a copper foil. Further, the power-receiving resonator 32 is constituted by an RLC circuit whose elements include a resistor $R_3$, a coil $L_3$, and a capacitor $C_3$. The coil $L_3$ is a 12-turn pattern coil with its coil diameter set to 35 mm$\phi$, which is formed by etching a copper foil. The values of $R_1$, $R_2$, $R_3$, $R_4$ in the wireless power transmission apparatus 1 used in Measurement Experiment 3 were set to 1.8 $\Omega$, 1.8 Q, 1.8 $\Omega$, and 1.8 $\Omega$, respectively. Further, the values of $L_1$, $L_2$, $L_3$, $L_4$ were set to 2.5 $\mu$H, 2.5 $\mu$H, 2.5 $\mu$H, and 2.5 $\mu$H, respectively. The resonance frequency of the power-supplying coil 21, the power-supplying resonator 22, the power-receiving resonator 32, and the power-receiving coil 31 was 8.0 MHz.

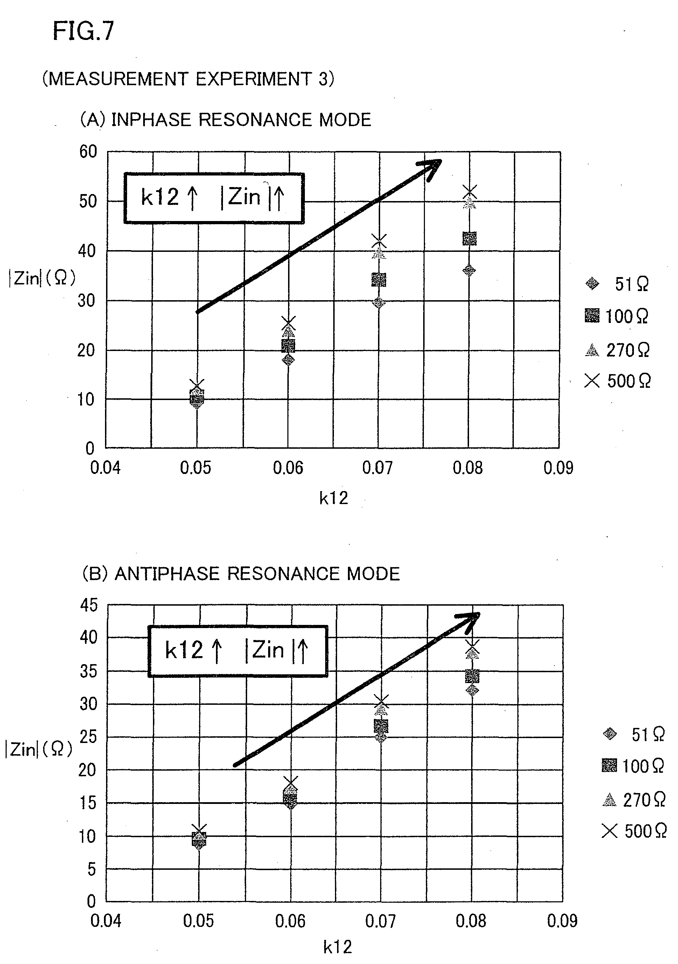

In the measurement experiment 3, the coupling coefficients $k_{23}$ and $k_{34}$ were fixed to 0.05 and 0.08, respectively, and while the value of the coupling coefficient $k_{12}$ was changed among four values, i.e., 0.05 $\Omega$, 0.06 $\Omega$, 0.07 $\Omega$, and 0.08 $\Omega$, the value of the input impedance $Z_{in}$ of the wireless power transmission apparatus 1 with respect to the driving frequencies of the power supplied to the power-supplying module 2 was measured for four values of the variable resistor 11 ($R_1$), i.e., 51 $\Omega$, 100 $\Omega$, 270 $\Omega$, and 500 $\Omega$. FIG. 7 (A) shows values resulting from measurements with the driving frequency of the AC power to the power-supplying module 2 set to the frequency fL nearby the peak on the low frequency side of the double-hump characteristic (inphase resonance mode: 7.9 MHz). FIG. 7 (B) shows values resulting from measurements with the driving frequency of the AC power to the power-supplying module 2 set to the frequency fH nearby the peak on the high frequency side of the double-hump characteristic (antiphase resonance mode: 8.2 MHz).

As should be seen in the measurement results in the inphase resonance mode shown in FIG. 7 (A), when the value of the variable resistor 11 ($R_1$) is set to 51 $\Omega$ and when the value of the coupling coefficient $k_{12}$ is raised in the sequence of 0.05 → 0.06 → 0.07 → 0.08, the value of the input impedance $Z_{in}$ of the wireless power transmission apparatus 1 rose as follows: 9.1 $\Omega$ → 18.0 $\Omega$ → 29.5 $\Omega$ → 35.9 $\Omega$.

Further, when the value of the variable resistor 11 ($R_1$) is set to 100 $\Omega$ and when the value of the coupling coefficient $k_{12}$ is raised in the sequence of 0.05 → 0.06 → 0.07 → 0.08, the value of the input impedance $Z_{in}$ of the wireless power transmission apparatus 1 rose as follows: 10.5 $\Omega$ → 20.7 $\Omega$ → 34.1 $\Omega$ → 42.3 $\Omega$.

Further, when the value of the variable resistor 11 ($R_1$) is set to 270 $\Omega$ and when the value of the coupling coefficient $k_{12}$ is raised in the sequence of 0.05 → 0.06 → 0.07 → 0.08, the value of the input impedance $Z_{in}$ of the wireless power transmission apparatus 1 rose as follows: 12.3 $\Omega$ → 24.0 $\Omega$ → 39.8 $\Omega$ → 49.9 $\Omega$.

Further, when the value of the variable resistor 11 ($R_1$) is set to 500 $\Omega$ and when the value of the coupling coefficient $k_{12}$ is raised in the sequence of 0.05 → 0.06 → 0.07 → 0.08, the value of the input impedance $Z_{in}$ of the wireless power transmission apparatus 1 rose as follows: 12.8 $\Omega$ → 25.4 $\Omega$ → 41.9 $\Omega$ → 51.9 $\Omega$.

As should be understood from the above, in the inphase resonance mode, the value of the input impedance $Z_{in}$ of the wireless power transmission apparatus 1 tends to rise with an increase in the coupling coefficient $k_{12}$ in a sequence of 0.05 → 0.06 → 0.07 --> 0.08, when the value of the variable resistor 11 ($R_1$) is set to any of the following values 51 $\Omega$, 100 $\Omega$, 270 $\Omega$, or 500 $\Omega$.

Similarly, as should be seen in the measurement results in the antiphase resonance mode shown in FIG. 7 (B), when the value of the variable resistor 11 ($R_1$) is set to 51 $\Omega$ and when the value of the coupling coefficient $k_{12}$ is raised in the sequence of 0.05 --> 0.06 --> 0.07 --> 0.08, the value of the input impedance $Z_{in}$ of the wireless power transmission apparatus 1 rose as follows: 8.7 $\Omega$ → 14.9 $\Omega$ → 25.0 $\Omega$ → 32.1 $\Omega$.

Further, when the value of the variable resistor 11 ($R_1$) is set to 100 $\Omega$ and when the value of the coupling coefficient $k_{12}$ is raised in the sequence of 0.05 → 0.06 → 0.07 → 0.08, the value of the input impedance $Z_{in}$ of the wireless power transmission apparatus 1 rose as follows: 9.5 $\Omega$ → 15.8 $\Omega$ → 26.6 $\Omega$ → 34.2 $\Omega$.

Further, when the value of the variable resistor 11 ($R_1$) is set to 270 $\Omega$ and when the value of the coupling coefficient $k_{12}$ is raised in the sequence of 0.05 → 0.06 → 0.07 → 0.08, the value of the input impedance $Z_{in}$ of the wireless power transmission apparatus 1 rose as follows: 10.5 $\Omega$ → 17.3 $\Omega$ → 29.4 $\Omega$ → 37.8 $\Omega$.

Further, when the value of the variable resistor 11 ($R_1$) is set to 500 $\Omega$ and when the value of the coupling coefficient $k_{12}$ is raised in the sequence of 0.05 → 0.06 → 0.07 → 0.08, the value of the input impedance $Z_{in}$ of the wireless power transmission apparatus 1 rose as follows: 10.8 $\Omega$ → 18.0 $\Omega$ → 30.5 $\Omega$ → 38.7 $\Omega$.

As should be understood from the above, in the antiphase resonance mode, the value of the input impedance $Z_{in}$ of the wireless power transmission apparatus 1 tends to rise with an increase in the coupling coefficient $k_{12}$ in a sequence of 0.05 → 0.06 → 0.07 → 0.08, when the value of the variable resistor 11 ($R_1$) is set to any of the following values 51 $\Omega$, 100 $\Omega$, 270 $\Omega$, or 500 $\Omega$.


(Measurement Experiment 4: Variation in Input Impedance $Z_{in}$ when Coupling Coefficient $k_{34}$ is Varied)

In the wireless power transmission apparatus 1 used in the measurement experiment 4, similarly to Measurement Experiment 1, the power-supplying coil 21 is constituted by an RL circuit (non-resonating) including a resistor $R_1$ and a coil $L_1$. The coil $L_1$ is a single-turn coil of a copper wire material (coated by an insulation film) with its coil diameter set to 96 mm$\phi$. Similarly, the power-receiving coil 31 constitutes an RL circuit (non-resonating) including a resistor $R_4$ and a coil $L_4$. The coil $L_4$ is a single-turn coil of a copper wire material (coated by an insulation film) with its coil diameter set to 96 mm$\phi$. The other structures are the same as those in Measurement Experiment 1. The values of $R_1$, $R_2$, $R_3$, $R_4$ in the wireless power transmission apparatus 4 used in Measurement Experiment 4 were set to 0.05$\Omega$, 0.5$\Omega$, 0.5$\Omega$, and 0.05$\Omega$, respectively. Further, the values of $L_1$, $L_2$, $L_3$, $L_4$ were set to 0.3 $\mu$H, 4 $\mu$H, 4 $\mu$H, and 0.3 $\mu$H, respectively (the same as Measurement experiment 1). The resonance frequency of the power-supplying resonator 22 and that of the power-receiving resonator 32 was 12.8 MHz.

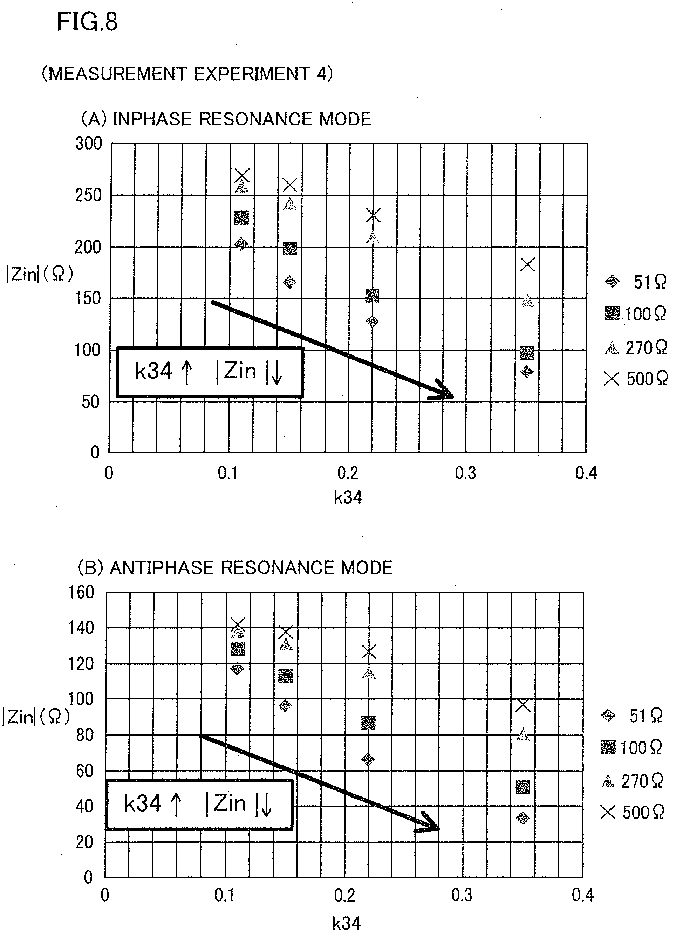

In the measurement experiment 4, the coupling coefficients $k_{12}$ and $k_{23}$ were fixed to 0.35 and 0.10, respectively, and while the value of the coupling coefficient $k_{12}$ was changed among four values, i.e., 0.11 $\Omega$, 0.15 $\Omega$, 0.22 $\Omega$, and 0.35 $\Omega$, the value of the input impedance $Z_{in}$ of the wireless power transmission apparatus 1 with respect to the driving frequencies of the power supplied to the power-supplying module 2 was measured for four values of the variable resistor 11 ($R_1$), i.e., 51 $\Omega$, 100 $\Omega$, 270 $\Omega$, and 500 $\Omega$ (the method of adjusting the coupling coefficient is detailed later) . FIG. 8 (A) shows values resulting from measurements with the driving frequency of the AC power to the power-supplying module 2 set to the frequency fL nearby the peak on the low frequency side of the double-hump characteristic (inphase resonance mode: 12.2 MHz) . FIG. 8 (B) shows values resulting from measurements with the driving frequency of the AC power to the power-supplying module 2 set to the frequency fH nearby the peak on the high frequency side of the double-hump characteristic (antiphase resonance mode: 13.4 MHz).

As should be seen in the measurement results in the inphase resonance mode shown in FIG. 8 (A), when the value of the variable resistor 11 ($R_1$) is set to 51 $\Omega$ and when the value of the coupling coefficient $k_{34}$ is raised in the sequence of 0.11 → 0.15 → 0.22 → 0.35, the value of the input impedance $Z_{in}$ of the wireless power transmission apparatus 1 decreased as follows: 202.5 $\Omega$ → 165.8 $\Omega$ → 127.4 $\Omega$ → 79.0 $\Omega$.

Further, when the value of the variable resistor 11 ($R_1$) is set to 100 $\Omega$ and when the value of the coupling coefficient $k_{34}$ is raised in the sequence of 0.11 → 0.15 → 0.22 → 0.35, the value of the input impedance $Z_{in}$ of the wireless power transmission apparatus 1 decreased as follows: 228.2 $\Omega$ → 197.7 $\Omega$ → 152.8 $\Omega$ → 97.1 $\Omega$.

Further, when the value of the variable resistor 11 ($R_1$) is set to 270 $\Omega$ and when the value of the coupling coefficient $k_{34}$ is raised in the sequence of 0.11 → 0.15 → 0.22 → 0.35, the value of the input impedance $Z_{in}$ of the wireless power transmission apparatus 1 decreased as follows: 259.1 $\Omega$ → 242.0 $\Omega$ → 209.7 $\Omega$ → 148.5 $\Omega$.

Further, when the value of the variable resistor 11 ($R_1$) is set to 500 $\Omega$ and when the value of the coupling coefficient $k_{34}$ is raised in the sequence of 0.11 --> 0.15 --> 0.22 --> 0.35, the value of the input impedance $Z_{in}$ of the wireless power transmission apparatus 1 decreased as follows: 269.2 $\Omega$ → 259.3 $\Omega$ → 230.2 $\Omega$ → 183.1 $\Omega$.

As should be understood from the above, in the inphase resonance mode, the value of the input impedance $Z_{in}$ of the wireless power transmission apparatus 1 tends to decrease with an increase in the coupling coefficient $k_{34}$ in a sequence of 0.11 → 0.15 → 0.22 → 0.35, when the value of the variable resistor 11 ($R_1$) is set to any of the following values 51 $\Omega$, 100 $\Omega$, 270 $\Omega$, or 500 $\Omega$.

Similarly, as should be seen in the measurement results in the antiphase resonance mode shown in FIG. 8 (B), when the value of the variable resistor 11 ($R_1$) is set to 51 $\Omega$ and when the value of the coupling coefficient $k_{34}$ is raised in the sequence of 0.11 → 0.15 → 0.22 → 0.35, the value of the input impedance $Z_{in}$ of the wireless power transmission apparatus 1 decreased as follows: 117.1 Q → 96.1 $\Omega$ → 66.1 $\Omega$ → 33.3 $\Omega$.

Further, when the value of the variable resistor 11 ($R_1$) is set to 100 $\Omega$ and when the value of the coupling coefficient $k_{34}$ is raised in the sequence of 0.11 → 0.15 → 0.22 → 0.35, the value of the input impedance $Z_{in}$ of the wireless power transmission apparatus 1 decreased as follows: 127.4 $\Omega$ → 112.8 $\Omega$ → 86.8 $\Omega$ → 50.3 $\Omega$.

Further, when the value of the variable resistor 11 ($R_1$) is set to 270 $\Omega$ and when the value of the coupling coefficient $k_{34}$ is raised in the sequence of 0.11 → 0.15 → 0.22 → 0.35, the value of the input impedance $Z_{in}$ of the wireless power transmission apparatus 1 decreased as follows: 138.0 $\Omega$ → 131.1 $\Omega$ → 115.0 $\Omega$ → 80.6 $\Omega$.

Further, when the value of the variable resistor 11 ($R_1$) is set to 500 $\Omega$ and when the value of the coupling coefficient $k_{34}$ is raised in the sequence of 0.11 → 0.15 → 0.22 → 0.35, the value of the input impedance $Z_{in}$ of the wireless power transmission apparatus 1 decreased as follows: 141.3 $\Omega$ → 137.6 $\Omega$ → 126.5 $\Omega$ → 96.7 $\Omega$.

As should be understood from the above, in the antiphase resonance mode, the value of the input impedance $Z_{in}$ of the wireless power transmission apparatus 1 tends to decrease with an increase in the coupling coefficient $k_{34}$ in a sequence of 0.11 → 0.15 → 0.22 → 0.35, when the value of the variable resistor 11 ($R_1$) is set to any of the following values 51 $\Omega$, 100 $\Omega$, 270 $\Omega$, or 500 $\Omega$.


(Measurement Experiment 5: Variation in Input Impedance $Z_{in}$ when Coupling Coefficient $k_{34}$ is Varied)


In the wireless power transmission apparatus 1 used in the measurement experiment 5, unlike Measurement Experiment 4, the power-supplying coil 21 is constituted by an RLC circuit (resonating) including a resistor $R_1$, a coil $L_1$, and a capacitor $C_1$. The coil $L_1$ is a single-turn coil of a copper wire material (coated by an insulation film) with its coil diameter set to 96 mm$\phi$. Similarly, the power-receiving coil 31 is constituted by an RLC circuit whose elements include a resistor $R_4$, a coil $L_4$, and a capacitor $C_4$. The coil $L_4$ is a single-turn coil of a copper wire material (coated by insulation film) with its coil diameter set to 96 mm$\phi$. The other structures are the same as those in Measurement Experiment 4. The values of $R_1$, $R_2$, $R_3$, $R_4$ in the wireless power transmission apparatus 1 used in Measurement Experiment 5 were set to 0.05 $\Omega$, 0.5 $\Omega$, 0.5 $\Omega$, and 0.05 $\Omega$, respectively. Further, the values of $L_1$, $L_2$, $L_3$, $L_4$ were set to 0.3 $\mu$H, 4 $\mu$H, 4 $\mu$H, and 0.3 $\mu$H, respectively. The resonance frequency of the power-supplying coil 21, the power-supplying resonator 22, the power-receiving resonator 32, and the power-receiving coil 31 was 12.8 MHz.

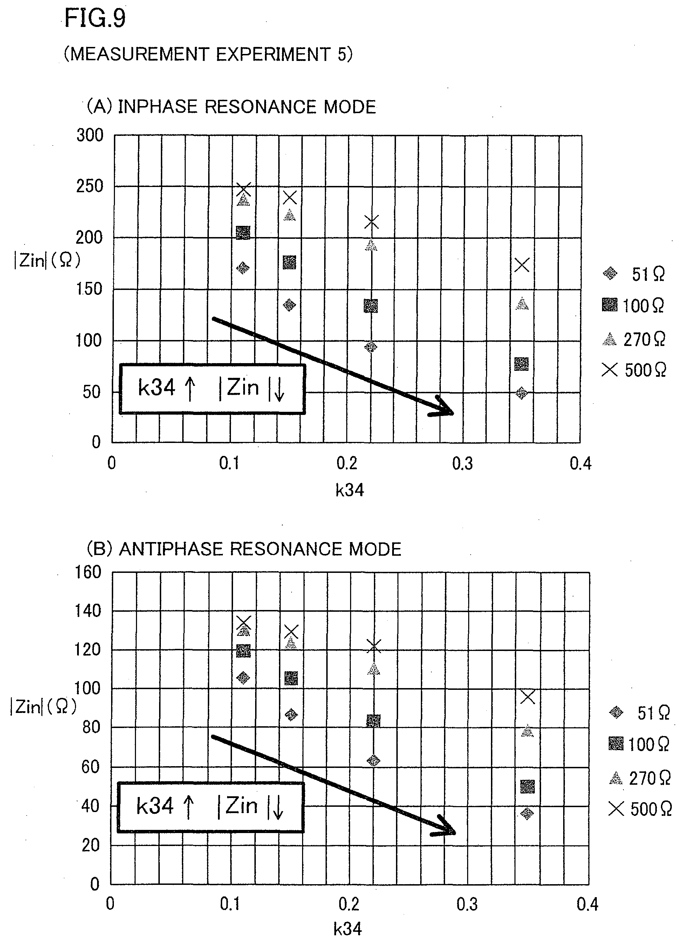

In the measurement experiment 5, the coupling coefficients $k_{12}$ and $k_{23}$ were fixed to 0.35 and 0.10, respectively, and while the value of the coupling coefficient $k_{34}$ was changed among four values, i.e., 0.11 $\Omega$, 0.15 $\Omega$, 0.22 $\Omega$, and 0.35 $\Omega$, the value of the input impedance $Z_{in}$ of the wireless power transmission apparatus 1 with respect to the driving frequencies of the power supplied to the power-supplying module 2 was measured for four values of the variable resistor 11 ($R_1$), i.e., 51 $\Omega$, 100 $\Omega$, 270 $\Omega$, and 500 $\Omega$. FIG. 9 (A) shows values resulting from measurements with the driving frequency of the AC power to the power-supplying module 2 set to the frequency fL nearby the peak on the low frequency side of the double-hump characteristic (inphase resonance mode: 12.2 MHz). FIG. 9 (B) shows values resulting from measurements with the driving frequency of the AC power to the power-supplying module 2 set to the frequency fH nearby the peak on the high frequency side of the double-hump characteristic (antiphase resonance mode: 13.4 MHz).

As should be seen in the measurement results in the inphase resonance mode shown in FIG. 9 (A), when the value of the variable resistor 11 ($R_1$) is set to 51 Ω and when the value of the coupling coefficient $k_{34}$ is raised in the sequence of 0.11 → 0.15 → 0.22 → 0.35, the value of the input impedance $Z_{in}$ of the wireless power transmission apparatus 1 decreased as follows: 170.5 Ω → 134.9 Ω → 94.2 Ω → 48.8 Ω.

Further, when the value of the variable resistor 11 ($R_1$) is set to 100 Ω and when the value of the coupling coefficient $k_{34}$ is raised in the sequence of 0.11 → 0.15 → 0.22 → 0.35, the value of the input impedance $Z_{in}$ of the wireless power transmission apparatus 1 decreased as follows: 204.9 Ω → 176.5 Ω → 133.4 Ω → 77.6 Ω.

Further, when the value of the variable resistor 11 ($R_1$) is set to 270 Ω and when the value of the coupling coefficient $k_{34}$ is raised in the sequence of 0.11 → 0.15 → 0.22 → 0.35, the value of the input impedance $Z_{in}$ of the wireless power transmission apparatus 1 decreased as follows: 238.0 Ω → 222.8 Q → 193.8 Ω → 136.5 Ω.

Further, when the value of the variable resistor 11 ($R_1$) is set to 500 Ω and when the value of the coupling coefficient $k_{34}$ is raised in the sequence of 0.11 → 0.15 → 0.22 → 0.35, the value of the input impedance $Z_{in}$ of the wireless power transmission apparatus 1 decreased as follows: 246.7 Ω → 239.7 Ω → 216.2 Ω → 173.1 Ω.

As should be understood from the above, in the inphase resonance mode, the value of the input impedance $Z_{in}$ of the wireless power transmission apparatus 1 tends to decrease with an increase in the coupling coefficient $k_{34}$ in a sequence of 0.11 --> 0.15 --> 0.22 --> 0.35, when the value of the variable resistor 11 ($R_1$) is set to any of the following values 51 Ω, 100 Ω, 270 Ω, or 500 Ω.

Similarly, as should be seen in the measurement results in the antiphase resonance mode shown in FIG. 9 (B), when the value of the variable resistor 11 ($R_1$) is set to 51 Q and when the value of the coupling coefficient $k_{34}$ is raised in the sequence of 0.11 → 0.15 → 0.22 → 0.35, the value of the input impedance $Z_{in}$ of the wireless power transmission apparatus 1 decreased as follows: 105.5 Ω → 86.6 Ω → 63.0 Ω → 35.9 Ω.

Further, when the value of the variable resistor 11 ($R_1$) is set to 100 Ω and when the value of the coupling coefficient $k_{34}$ is raised in the sequence of 0.11 → 0.15 → 0.22 → 0.35, the value of the input impedance $Z_{in}$ of the wireless power transmission apparatus 1 decreased as follows: 119.3 Ω → 105.2 Ω → 83.3 Ω → 49.8 Ω.

Further, when the value of the variable resistor 11 ($R_1$) is set to 270 Ω and when the value of the coupling coefficient $k_{34}$ is raised in the sequence of 0.11 → 0.15 → 0.22 → 0.35, the value of the input impedance $Z_{in}$ of the wireless power transmission apparatus 1 decreased as follows: 130.6 Ω → 123.4 Ω → 110.9 Ω → 79.0 Ω.

Further, when the value of the variable resistor 11 ($R_1$) is set to 500 Ω and when the value of the coupling coefficient $k_{34}$ is raised in the sequence of 0.11 → 0.15 → 0.22 → 0.35, the value of the input impedance $Z_{in}$ of the wireless power transmission apparatus 1 decreased as follows: 133.9 Ω → 129.3 Ω → 122.1 Ω → 95.9 Ω.

As should be understood from the above, in the antiphase resonance mode, the value of the input impedance $Z_{in}$ of the wireless power transmission apparatus 1 tends to decrease with an increase in the coupling coefficient $k_{34}$ in a sequence of 0.11 → 0.15 → 0.22 → 0.35, when the value of the variable resistor 11 ($R_1$) is set to any of the following values 51 Ω, 100 Ω, 270 Ω, or 500 Ω.

(Measurement Experiment 6: Variation in Input Impedance $Z_{in}$ when Coupling Coefficient $k_{34}$ is Varied)

The wireless power transmission apparatus 1 used in Measurement Experiment 6, unlike Measurement Experiments 4 and 5, adopts a pattern coil formed by winding a coil in a planer manner on coil parts of the power-supplying coil 21, the power-supplying resonator 22, the power-receiving resonator 32, and the power-receiving coil 31. Further, the power-supplying coil 21 is constituted by an RLC circuit (resonating) whose elements include a resistor $R_1$, a coil $L_1$, and a capacitor $C_1$. The coil $L_1$ is a 12-turn pattern coil with its coil diameter set to 35 mmφ, which is formed by etching a copper foil. Further, the power-receiving coil 31 is constituted by an RLC circuit whose elements include a resistor $R_4$, a coil $L_4$, and a capacitor $C_4$. The coil $L_4$ is a 12-turn pattern coil with its coil diameter set to 35 mmφ, which is formed by etching a copper foil. Further, the power-supplying resonator 22 is constituted by an RLC circuit whose elements include a resistor $R_2$, a coil $L_2$, and a capacitor $C_2$. The coil $L_2$ is a 12-turn pattern coil with its coil diameter set to 35 mmφ, which is formed by etching a copper foil. Further, the power-receiving resonator 32 is constituted by an RLC circuit whose elements include a resistor $R_3$, a coil $L_3$, and a capacitor $C_3$. The coil $L_3$ is a 12-turn pattern coil with its coil diameter set to 35 mmφ, which is formed by etching a copper foil. The values of $R_1$, $R_2$, $R_3$, $R_4$ in the wireless power transmission apparatus 1 used in Measurement Experiment 6 were set to 1.8 Ω, 1.8 Ω, 1.8 Ω, and 1.8 Ω, respectively. Further, the values of $L_1$, $L_2$, $L_3$, $L_4$ were set to 2.5 μH, 2.5 μH, 2.5 μH, and 2.5 μH, respectively. The resonance frequency of the power-supplying coil 21, the power-supplying resonator 22, the power-receiving resonator 32, and the power-receiving coil 31 was 8.0 MHz.

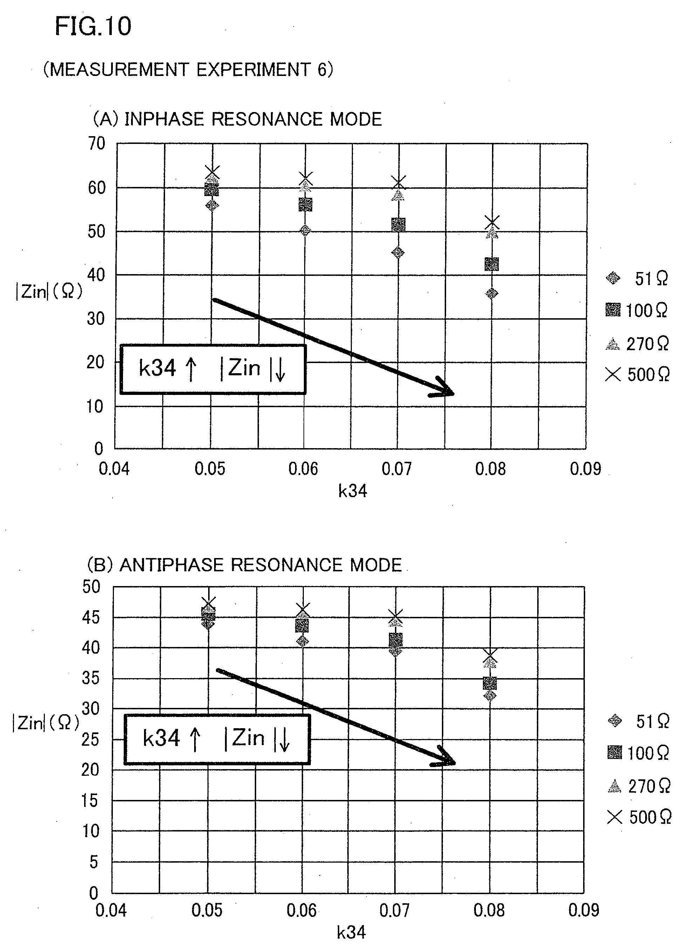

In the measurement experiment 6, the coupling coefficients $k_{12}$ and $k_{23}$ were fixed to 0.08 and 0.05, respectively, and while the value of the coupling coefficient $k_{34}$ was changed among four values, i.e., 0.05 Ω, 0.06 Ω, 0.07 Ω, and 0.08 Ω, the value of the input impedance $Z_{in}$ of the wireless power transmission apparatus 1 with respect to the driving frequencies of the power supplied to the power-supplying module 2 was measured for four values of the variable resistor 11 ($R_1$), i.e., 51 Ω, 100 Ω, 270 Ω, and 500 Ω. FIG. 10 (A) shows values resulting from measurements with the driving frequency of the AC power to the power-supplying module 2 set to the frequency fL nearby the peak on the low frequency side of the double-hump characteristic (inphase resonance mode: 7.9 MHz). FIG. 10 (B) shows values resulting from measurements with the driving frequency of the AC power to the power-supplying module 2 set to the frequency fH nearby the peak on the high frequency side of the double-hump characteristic (antiphase resonance mode: 8.2 MHz).

As should be seen in the measurement results in the inphase resonance mode shown in FIG. 10 (A), when the value of the variable resistor 11 ($R_1$) is set to 51 $\Omega$ and when the value of the coupling coefficient $k_{34}$ is raised in the sequence of 0.05 → 0.06 → 0.07 → 0.08, the value of the input impedance $Z_{in}$ of the wireless power transmission apparatus 1 decreased as follows: 55.8 $\Omega$ → 50.2 $\Omega$ → 45.3 $\Omega$ → 35.9 $\Omega$.
Further, when the value of the variable resistor 11 ($R_1$) is set to 100 $\Omega$ and when the value of the coupling coefficient $k_{34}$ is raised in the sequence of 0.05 → 0.06 → 0.07 → 0.08, the value of the input impedance $Z_{in}$ of the wireless power transmission apparatus 1 decreased as follows: 59.7 $\Omega$ → 56.1 $\Omega$ → 51.4 $\Omega$ → 42.3 $\Omega$. Further, when the value of the variable resistor 11 ($R_1$) is set to 270 $\Omega$ and when the value of the coupling coefficient $k_{34}$ is raised in the sequence of 0.05 → 0.06 → 0.07 → 0.08, the value of the input impedance $Z_{in}$ of the wireless power transmission apparatus 1 decreased as follows: 62.6 Q → 60.6 $\Omega$ → 58.6 $\Omega$ → 49.9 $\Omega$.
Further, when the value of the variable resistor 11 ($R_1$) is set to 500 $\Omega$ and when the value of the coupling coefficient $k_{34}$ is raised in the sequence of 0.05 → 0.06 → 0.07 → 0.08, the value of the input impedance $Z_{in}$ of the wireless power transmission apparatus 1 decreased as follows: 63.5 $\Omega$ → 62.0 $\Omega$ → 61.0 $\Omega$ → 51.9 $\Omega$.
As should be understood from the above, in the inphase resonance mode, the value of the input impedance $Z_{in}$ of the wireless power transmission apparatus 1 tends to decrease with an increase in the coupling coefficient $k_{34}$ in a sequence of 0.05 → 0.06 → 0.07 → 0.08, when the value of the variable resistor 11 ($R_1$) is set to any of the following values 51 $\Omega$, 100 $\Omega$, 270 $\Omega$, or 500 $\Omega$.

Similarly, as should be seen in the measurement results in the antiphase resonance mode shown in FIG. 10 (B), when the value of the variable resistor 11 ($R_1$) is set to 51 $\Omega$ and when the value of the coupling coefficient $k_{34}$ is raised in the sequence of 0.05 → 0.06 → 0.07 → 0.08, the value of the input impedance $Z_{in}$ of the wireless power transmission apparatus 1 decreased as follows: 43.9 $\Omega$ → 41.0 $\Omega$ → 39.4 $\Omega$ → 32.1 $\Omega$.
Further, when the value of the variable resistor 11 ($R_1$) is set to 100 $\Omega$ and when the value of the coupling coefficient $k_{34}$ is raised in the sequence of 0.05 → 0.06 → 0.07 → 0.08, the value of the input impedance $Z_{in}$ of the wireless power transmission apparatus 1 decreased as follows: 45.6 $\Omega$ → 43.7 $\Omega$ → 41.2 $\Omega$ → 34.2 $\Omega$.
Further, when the value of the variable resistor 11 ($R_1$) is set to 270 $\Omega$ and when the value of the coupling coefficient $k_{34}$ is raised in the sequence of 0.05 → 0.06 → 0.07 → 0.08, the value of the input impedance $Z_{in}$ of the wireless power transmission apparatus 1 decreased as follows: 46.8 $\Omega$ → 45.7 $\Omega$ → 44.6 $\Omega$ → 37.8 $\Omega$.
Further, when the value of the variable resistor 11 ($R_1$) is set to 500 $\Omega$ and when the value of the coupling coefficient $k_{34}$ is raised in the sequence of 0.05 → 0.06 → 0.07 → 0.08, the value of the input impedance $Z_{in}$ of the wireless power transmission apparatus 1 decreased as follows: 47.1 $\Omega$ → 46.2 $\Omega$ → 45.1 $\Omega$ → 38.7 $\Omega$.
As should be understood from the above, in the antiphase resonance mode, the value of the input impedance $Z_{in}$ of the wireless power transmission apparatus 1 tends to decrease with an increase in the coupling coefficient $k_{34}$ in a sequence of 0.05 → 0.06 → 0.07 → 0.08, when the value of the variable resistor 11 ($R_1$) is set to any of the following values 51 $\Omega$, 100 $\Omega$, 270 $\Omega$, or 500 $\Omega$.

With the above Measurement Experiments 1 to 6, the power to be supplied is adjustable by setting an input impedance $Z_{in}$ of the wireless power transmission apparatus 1 by means of adjusting a value of coupling coefficient such as the coupling coefficients $k_{12}$ and $k_{34}$, between coils next to each other, in the power-supplying coil 21, the power-supplying resonator 22, the power-receiving resonator 32, and the power-receiving coil 31 provided in the wireless power transmission apparatus 1.

(Method of Adjusting Coupling Coefficient)

The following describes a method of adjusting the coupling coefficients $k_{12}$, $k_{23}$, and $k_{34}$, which are each a parameter for controlling the input impedance $Z_{in}$ in the wireless power transmission apparatus 1.

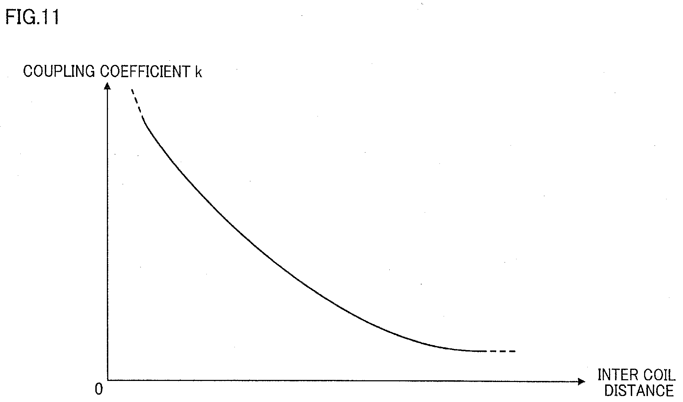

In wireless power transmission, the relation between a coupling coefficient k and a distance between a coil and another coil is typically such that the value of the coupling coefficient k increases with a decrease in (shortening of) the distance between the coil and the other coil, as shown in FIG. 11. In the wireless power transmission apparatus 1 of the present embodiment for instance, the coupling coefficient $k_{12}$ between the power-receiving coil 21 (coil $L_1$) and the power-supplying resonator 22 (coil $L_2$), the coupling coefficient $k_{23}$ between the power-supplying resonator 22 (coil $L_2$) and the power-receiving resonator 32 (coil $L_3$), and the coupling coefficient $K_{34}$ between the power-receiving resonator 32 (coil $L_3$) and the power-receiving coil 31 (coil $L_4$) are increased by reducing a distance d12 between the power-supplying coil 21 and the power-supplying resonator 22, a distance d23 between the power-supplying resonator 22 and the power-receiving resonator 32, and a distance d34 between the power-receiving resonator 32 and the power-receiving coil 31. To the contrary, the coupling coefficient $k_{12}$ between the power-receiving coil 21 (coil $L_1$) and the power-supplying

resonator 22 (coil $L_2$), the coupling coefficient $k_{23}$ between the power-supplying resonator 22 (coil $L_2$) and the power-receiving resonator 32 (coil $L_3$), and the coupling coefficient $K_{34}$ between the power-receiving resonator 32 (coil $L_3$) and the power-receiving coil 31 (coil $L_4$) are lowered by extending a distance d12 between the power-supplying coil 21 and the power-supplying resonator 22, a distance d23 between the power-supplying resonator 22 and the power-receiving resonator 32, and a distance d34 between the power-receiving resonator 32 and the power-receiving coil 31.

As should be understood from the measurement experiments for variation in the input impedance $Z_{in}$ due to variation in the coupling coefficient, with the above method for adjusting the coupling coefficient, if the distance d23 between the power-supplying resonator 22 and the power-receiving resonator 32 and the distance d34 between the power-receiving resonator 32 and the power-receiving coil 31 are fixed, the value of the coupling coefficient $k_{12}$ between the power-supplying coil 21 and the power-supplying resonator 22 is increased with a decrease in the distance d12 between the power-supplying coil 21 and the power-supplying resonator 22. Increasing the value of the coupling coefficient $k_{12}$ raises the value of the input impedance $Z_{in}$ in the wireless power transmission apparatus 1. To the contrary, by increasing the distance d12 between the power-supplying coil 21 and the power-supplying resonator 22, the value of the coupling coefficient $k_{12}$ between the power-supplying coil 21 and the power-supplying resonator 22 is reduced. Reduction of the value of the coupling coefficient $k_{12}$ lowers the value of the input impedance $Z_{in}$ in the wireless power transmission apparatus 1.

That is, the value of the input impedance $Z_{in}$ increases with a decrease in the distance d12 between the power-supplying coil 21 and the power-supplying resonator 22. Based on (Formula 2), the increase in the input impedance $Z_{in}$ reduces the current $I_{in}$ in the wireless power transmission apparatus 1, thus controlling the power output from the wireless power transmission apparatus 1 to be small. To the contrary, the value of the input impedance $Z_{in}$ decreases with an increase in the distance d12 between the power-supplying coil 21 and the power-supplying resonator 22. Based on (Formula 2), the decrease in the input impedance $Z_{in}$ raises the current $I_{in}$ in the wireless power transmission apparatus 1, thus controlling the power output from the wireless power transmission apparatus 1 to be large.

In other words, the above described supply power control method for a wireless power transmission apparatus 1, utilizing the above described characteristic enables adjustment of the input impedance $Z_{in}$ in a wireless power transmission apparatus 1 thereby enabling control of the power output from the wireless power transmission apparatus 1, simply by physically varying the distance d12 between the power-supplying coil 21 and the power-supplying resonator 22.

Further, if the distance d12 between the power-supplying coil 21 and the power-supplying resonator 22 and the distance d23 between the power-supplying resonator 22 and the power-receiving resonator 32 are fixed, the value of the coupling coefficient $k_{34}$ between the power-receiving resonator 32 and the power-receiving coil 31 increases with a decrease in the distance d34 between the power-receiving resonator 32 and the power-receiving coil 31. Increasing the value of the coupling coefficient $k_{34}$ reduces the value of the input impedance $Z_{in}$ in the wireless power transmission apparatus 1. To the contrary, by increasing the distance d34 between the power-receiving resonator 32 and the power-receiving coil 31, the value of the coupling coefficient $k_{34}$ between the power-receiving resonator 32 and the power-receiving coil 31 is reduced. Reduction of the value of the coupling coefficient $k_{34}$ raises the value of the input impedance $Z_{in}$ in the wireless power transmission apparatus 1.

That is, the value of the input impedance $Z_{in}$ decreases with a decrease in the distance d34 between the power-receiving resonator 32 and the power-receiving coil 31. Based on (Formula 2), the decrease in the input impedance $Z_{in}$ raises the current $I_{in}$ in the wireless power transmission apparatus 1, thus controlling the power output from the wireless power transmission apparatus 1 to be large. To the contrary, the value of the input impedance $Z_{in}$ increases with an increase in the distance d34 between the power-receiving resonator 32 and the power-receiving coil 31. Based on (Formula 2), the increase in the input impedance $Z_{in}$ reduces the current $I_{in}$ in the wireless power transmission apparatus 1, thus controlling the power output from the wireless power transmission apparatus 1 to be small.

In other words, the above described supply power control method for a wireless power transmission apparatus 1, utilizing the above described characteristic enables adjustment of the input impedance $Z_{in}$ in a wireless power transmission apparatus 1 thereby enabling control of the power output from the wireless power transmission apparatus 1, simply by physically varying the distance d34 between the power-receiving resonator 32 and the power-receiving coil 31.

It should be noted that a case of varying the distance d12 between the power-supplying coil 21 and the power-supplying resonator 22 and the distance d34 between the power-receiving resonator 32 and the power-receiving coil 31 was described above as an example method for adjusting the coupling coefficients $k_{12}$, $k_{23}$, and $k_{34}$ which are parameters for controlling the input impedance $Z_{in}$ in the wireless power transmission apparatus 1. The method of adjusting the coupling coefficients $k_{12}$, $k_{23}$, and $k_{34}$ is not limited to this. For example, the following approaches are possible: disposing the power-supplying resonator 22 and the power-receiving resonator 32 so their axes do not match with each other; giving an angle to the coil surfaces of the power-supplying resonator 22 and the power-receiving resonator 32; varying the property of each element (resistor, capacitor, coil) of the power-supplying coil 21, the power-supplying resonator 22, the power-receiving resonator 32, and the power-receiving coil 31; varying the driving frequency of the AC power supplied to a power-supplying module 2.

(Manufacturing Method)

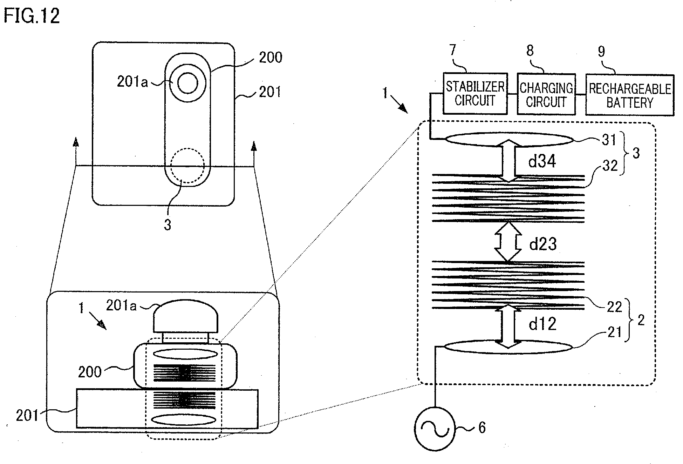

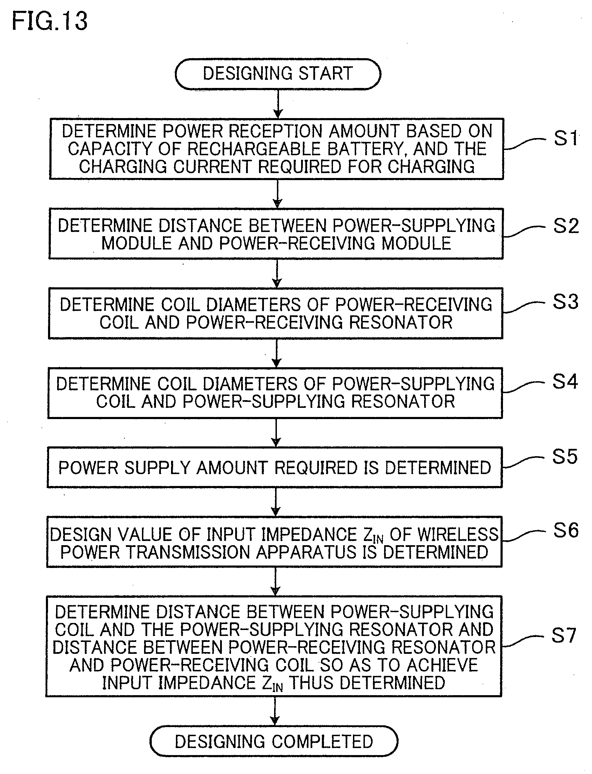

Next, the following describes with reference to FIG. 12 and FIG. 13 a design method (design process) which is a part of manufacturing process of the wireless power transmission apparatus 1. In the following description, an RF headset 200 having an earphone speaker unit 201a, and a charger 201 are described as a portable device having the wireless power transmission apparatus 1 (see FIG. 12).

The wireless power transmission apparatus 1 to be designed in the design method is implemented on an RF headset 200 and a charger 201 shown in FIG. 12, in the form of a power-receiving module 3 (a power-receiving coil 31 and a power-receiving resonator 32) and a power-supplying module 2 (a power-supplying coil 21 and a power-supplying resonator 22), respectively. For the sake of convenience, FIG. 12 illustrates the stabilizer circuit 7, the charging circuit 8, and the rechargeable battery 9 outside the power-receiving module 3; however, these are actually disposed on the inner circumference side of the solenoid power-receiving coil 31 and the coil of the power-receiving resonator 32. That is, the RF headset 200 includes the power-receiving module 3, the stabilizer circuit 7, the charging circuit 8, and the rechargeable battery 9, and the charger 201 has a power-supplying module 2. While in use, the power-supplying coil 21 of the power-supplying module 2 is connected to an AC power source 6.

(Design Method)

First, as shown in FIG. 13, a power reception amount in the power-receiving module 3 is determined based on the capacity of the rechargeable battery 9, and the charging current required for charging the rechargeable battery 9 (S1).

Next, the distance between the power-supplying module 2 and the power-receiving module 3 is determined (S2) . The distance is the distance d23 between the power-supplying resonator 22 and the power-receiving resonator 32, while the RF headset 200 having therein the power-receiving module 3 is placed on the charger 201 having therein the power-supplying module 2, i.e., during the charging state. To be more specific, the distance d23 between the power-supplying resonator 22 and the power-receiving resonator 32 is determined, taking into account the shapes and the structures of the RF headset 200 and the charger 201.

Further, based on the shape and the structure of the RF headset 200, the coil diameters of the power-receiving coil 31 in the power-receiving module 3 and the coil of the power-receiving resonator 32 are determined (S3).

Further, based on the shape and the structure of the charger 201, the coil diameters of the power-supplying coil 21 in the power-supplying module 2 and the coil of the power-supplying resonator 22 are determined (S4).

Through the steps of S2 to S4, the coupling coefficient $K_{23}$ between the power-supplying resonator 22 (coil $L_2$) of the wireless power transmission apparatus 1 and the power-receiving resonator 32 (coil $L_3$), and the power transmission efficiency of the wireless power transmission apparatus 1 are determined.

Based on the power reception amount in the power-receiving module 3 determined in S1 and on the power transmission efficiency determined through S2 to S4, the minimum power supply amount required for the power-supplying module 2 is determined (S5).

Then, the design values of the input impedance $Z_{in}$ in the wireless power transmission apparatus 1 is determined, taking into account the power reception amount in the power-receiving module 3, the power transmission efficiency, and the minimum power supply amount required to the power-supplying module 2 (S6).

Then, the distance d12 between the power-supplying coil 21 and the power-supplying resonator 22 and the distance d34 between the power-receiving resonator 32 and the power-receiving coil 31 are determined so as to achieve the design value of the input impedance $Z_{in}$ determined in S6 (S7) . Specifically, to determine the distance d12 between the power-supplying coil 21 and the power-supplying resonator 22 and the distance d34 between the power-receiving resonator 32 and the power-receiving coil 31 are determined so as to achieve the input impedance $Z_{in}$ determined in S6, an adjustment is conducted based on the characteristic that the value of the input impedance $Z_{in}$ of the wireless power transmission apparatus 1 increases, by reducing the distance d12 between the power-supplying coil 21 and the power-supplying resonator 22 when the distance d23 between the power-supplying resonator 22 and the power-receiving resonator 32 and the distance d34 between the power-receiving resonator 32 and the power-receiving coil 31 are fixed, or the characteristic that the value of the input impedance $Z_{in}$ of the wireless power transmission apparatus 1 decreases by reducing the distance d34 between the power-receiving resonator 32 and the power-receiving coil 31 when the distance d12 between the power-supplying coil 21 and the power-supplying resonator 22 and the distance d23 between the power-supplying resonator 22 and the power-receiving resonator 32 are fixed.

With the above-described manufacturing method of the wireless power transmission apparatus 1 including the above design method and the wireless power transmission apparatus 1 having undergone the above-described design process, there is provided a wireless power transmission apparatus 1 in which power to be supplied by means of wireless power transmission is adjustable by setting the value of the input impedance $Z_{in}$ in the wireless power transmission apparatus 1, without a need of an additional device. In other words, manufacturing of a wireless power transmission apparatus 1 capable of controlling power to be supplied is possible without a need of an additional component in the wireless power transmission apparatus 1.

(Other Embodiments)

Although the above description of the manufacturing method deals with an RF headset 200 as an example, the method is applicable to any devices having a rechargeable battery; e.g., tablet PCs, digital cameras, mobile phone phones, earphone-type music player, hearing aids, and sound collectors.

Although the above description deals with a wireless power transmission apparatus 1 configured to perform power transmission by means of magnetic coupling using a resonance phenomenon (magnetic field resonant state) between resonators (coils) provided to a power-supplying module 2 and a power-receiving module 3 , the present invention is applicable to a wireless power transmission apparatus 1 configured to perform power transmission by using electromagnetic induction between coils.

Further, although the above description assumes the wireless power transmission apparatus 1 is mounted in a portable electronic device, the use of such an apparatus is not limited to small devices. For example, with a modification to the specifications according to the required power amount, the wireless power transmission apparatus 1 is mountable to a relatively large system such as a wireless charging system in an electronic vehicle (EV), or to an even smaller device such as a wireless endoscope for medical use.

Although the above descriptions have been provided with regard to the characteristic parts so as to understand the present invention more easily, the invention is not limited to the embodiments and the examples as described above and can be applied to the other embodiments and examples, and the applicable scope should be construed as broadly as possible. Furthermore, the terms and phraseology used in the specification have been used to correctly illustrate the present invention, not to limit it. In addition, it will be understood by those skilled in the art that the other structures, systems, methods and the like included in the spirit of the present invention can be easily derived from the spirit of the invention described in the specification. Accordingly, it should be considered that the present invention covers equivalent structures thereof without departing from the spirit and scope of the invention as defined in the following claims. In addition, it is required to sufficiently refer to the documents that have been already disclosed, so as to fully understand the objects and effects of the present invention.

Reference Signs List

| 1. | Wireless Power Transmission Apparatus |
| 2. | Power-Supplying Module |
| 3. | Power-Receiving Module |
| 6. | AC Power Source |
| 7. | Stabilizer Circuit |
| 8. | Charging Circuit |
| 9. | Rechargeable Battery |
| 21. | Power-Supplying Coil |
| 22. | Power-Supplying Resonator |
| 31. | Power-Receiving Coil |
| 32. | Power-Receiving Resonator |
| 200. | RF Headset |
| 201. | Charger |

**Claims**

1.    A supply power control method, wherein: the method is for a wireless power transmission apparatus configured to supply power from a power-supplying module comprising at least one of a power-supplying coil and a power-supplying resonator to a power-receiving module comprising at least one of a power-receiving resonator and a power-receiving coil, while varying a magnetic field,
the power-supplying coil, the power-supplying resonator, the power-receiving resonator, and the power-receiving coil each has at least one coil; and
power to be supplied is adjusted by setting an input impedance of the wireless power transmission apparatus, by means of adjusting a value of coupling coefficient between coils next to each other.

**2.** The method according to claim 1, wherein: the method is for a wireless power transmission apparatus configured to supply power from a power-supplying module comprising at least a power-supplying coil and a power-supplying resonator to a power-receiving module comprising at least a power-receiving resonator and a power-receiving coil, by means of a resonance phenomenon;

the input impedance of the wireless power transmission apparatus is adjusted by adjusting at least one of a coupling coefficient $k_{12}$ between the power-supplying coil and the power-supplying resonator, a coupling coefficient $k_{23}$ between the power-supplying resonator and the power-receiving resonator, and a coupling coefficient $k_{34}$ between the power-receiving resonator and the power-receiving coil.

**3.** The method according to claim 2, wherein the values of the coupling coefficients $k_{12}$, $k_{23}$, and $k_{34}$ are adjusted by varying at least one of a distance between the power-supplying coil and the power-supplying resonator, a distance between the power-supplying resonator and the power-receiving resonator, and a distance between power-receiving resonator and the power-receiving coil.

**4.** The method according to claim 3, wherein the adjustment is based on a characteristic such that, if the distance between the power-supplying resonator and the power-receiving resonator, and the distance between the power-receiving resonator and the power-receiving coil are fixed,
the power supplied by the resonance phenomenon is such that,
the value of the coupling coefficient $k_{12}$ between the power-supplying coil and the power-supplying resonator increases with a decrease in the distance between the power-supplying coil and the power-supplying resonator, and the value of the input impedance of the wireless power transmission apparatus increases with the increase in the value of the coupling coefficient $k_{12}$.

**5.** The method according to claim 3, wherein the adjustment is based on a characteristic such that, if the distance between the power-supplying coil and the power-supplying resonator, and the distance between the power-supplying resonator and the power-receiving resonator are fixed,
the power supplied by the resonance phenomenon is such that,
the value of the coupling coefficient $k_{34}$ between the power-receiving resonator and the power-receiving coil increases with a decrease in the distance between the power-receiving resonator and the power-receiving coil, and the value of the input impedance of the wireless power transmission apparatus decreases with the increase in the value of the coupling coefficient $k_{34}$.

**6.** The method according to any one of claims 2 to 5, wherein a transmission characteristic with respect to a driving frequency of the power supplied to the power-supplying module has a peak occurring in a drive frequency band lower than a resonance frequency of the power-supplying module and the power-receiving module, and in a drive frequency band higher than the resonance frequency, and
the driving frequency of the power supplied to the power-supplying module is in a band corresponding to a peak value of the transmission characteristic occurring in a driving frequency band lower than the resonance frequency.

**7.** The method according to any one of claims 2 to 5, wherein a transmission characteristic with respect to a driving frequency of the power supplied to the power-supplying module has a peak occurring in a drive frequency band lower than a resonance frequency of the power-supplying module and the power-receiving module, and in a drive frequency band higher than the resonance frequency, and
the driving frequency of the power supplied to the power-supplying module is in a band corresponding to a peak value of the transmission characteristic occurring in a driving frequency band higher than the resonance frequency.

**8.** A wireless power transmission apparatus adjusted by the supply power control method for a wireless power transmission apparatus according to any one of claims 1 to 5.

**9.** A wireless power transmission apparatus adjusted by the supply power control method for a wireless power transmission apparatus according to claim 6.

**10.** A wireless power transmission apparatus adjusted by the supply power control method for a wireless power transmission apparatus according to claim 7.

**11.** A manufacturing method for a wireless power transmission apparatus configured to supply power from a power-supplying module comprising at least one of a power-supplying coil and a power-supplying resonator to a power-receiving module comprising at least one of a power-receiving resonator and a power-receiving coil, while varying a magnetic field, comprising the steps of:

providing at least one coil in each of the power-supplying coil, the power-supplying resonator, the power-receiving resonator, and the power-receiving coil; and
adjusting power to be supplied by setting an input impedance of the wireless power transmission apparatus, by means of adjusting a value of coupling coefficient between coils next to each other.

FIG.1

$I_{in}$ (Current)

$V_{in}$ (Voltage)

$Z_{in}$ (Impedance)

$$I_{in} = V_{in} / Z_{in}$$

FIG.2

FIG.3

FIG.4

# FIG.5

(MEASUREMENT EXPERIMENT 1)

### (A) INPHASE RESONANCE MODE

### (B) ANTIPHASE RESONANCE MODE

# FIG.6

(MEASUREMENT EXPERIMENT 2)

## (A) INPHASE RESONANCE MODE

## (B) ANTIPHASE RESONANCE MODE

# FIG.7

(MEASUREMENT EXPERIMENT 3)

## (A) INPHASE RESONANCE MODE

k12 ↑   |Zin|↑

|Zin|(Ω)

◆ 51Ω
▦ 100Ω
▲ 270Ω
✕ 500Ω

k12

## (B) ANTIPHASE RESONANCE MODE

k12 ↑   |Zin|↑

|Zin|(Ω)

◆ 51Ω
▦ 100Ω
▲ 270Ω
✕ 500Ω

k12

# FIG.8

(MEASUREMENT EXPERIMENT 4)

(A) INPHASE RESONANCE MODE

(B) ANTIPHASE RESONANCE MODE

# FIG.9

(MEASUREMENT EXPERIMENT 5)

### (A) INPHASE RESONANCE MODE

Legend:
- ◈ 51 Ω
- ▣ 100 Ω
- △ 270 Ω
- ✕ 500 Ω

k34 ↑   |Zin| ↓

$|Zin|$ (Ω) vs k34

### (B) ANTIPHASE RESONANCE MODE

Legend:
- ◈ 51 Ω
- ▣ 100 Ω
- △ 270 Ω
- ✕ 500 Ω

k34 ↑   |Zin| ↓

$|Zin|$ (Ω) vs k34

# FIG.10

(MEASUREMENT EXPERIMENT 6)

## (A) INPHASE RESONANCE MODE

## (B) ANTIPHASE RESONANCE MODE

FIG.11

FIG.12

# FIG.13

```
┌─────────────────────────────┐
│      DESIGNING START         │
└─────────────────────────────┘
              │
              ▼
┌───────────────────────────────────────────┐
│ DETERMINE POWER RECEPTION AMOUNT BASED ON  │── S1
│ CAPACITY OF RECHARGEABLE BATTERY, AND THE  │
│ CHARGING CURRENT REQUIRED FOR CHARGING     │
└───────────────────────────────────────────┘
              │
              ▼
┌───────────────────────────────────────────┐
│ DETERMINE DISTANCE BETWEEN POWER-SUPPLYING │── S2
│ MODULE AND POWER-RECEIVING MODULE          │
└───────────────────────────────────────────┘
              │
              ▼
┌───────────────────────────────────────────┐
│ DETERMINE COIL DIAMETERS OF POWER-RECEIVING│── S3
│ COIL AND POWER-RECEIVING RESONATOR         │
└───────────────────────────────────────────┘
              │
              ▼
┌───────────────────────────────────────────┐
│ DETERMINE COIL DIAMETERS OF POWER-SUPPLYING│── S4
│ COIL AND POWER-SUPPLYING RESONATOR         │
└───────────────────────────────────────────┘
              │
              ▼
┌───────────────────────────────────────────┐
│ POWER SUPPLY AMOUNT REQUIRED IS DETERMINED │── S5
└───────────────────────────────────────────┘
              │
              ▼
┌───────────────────────────────────────────┐
│ DESIGN VALUE OF INPUT IMPEDANCE $Z_{IN}$ OF WIRELESS │── S6
│ POWER TRANSMISSION APPARATUS IS DETERMINED │
└───────────────────────────────────────────┘
              │
              ▼
┌───────────────────────────────────────────┐
│ DETERMINE DISTANCE BETWEEN POWER-SUPPLYING │
│ COIL AND THE POWER-SUPPLYING RESONATOR AND │
│ DISTANCE BETWEEN POWER-RECEIVING RESONATOR │── S7
│ AND POWER-RECEIVING COIL SO AS TO ACHIEVE  │
│ INPUT IMPEDANCE $Z_{IN}$ THUS DETERMINED   │
└───────────────────────────────────────────┘
              │
              ▼
┌─────────────────────────────┐
│    DESIGNING COMPLETED       │
└─────────────────────────────┘
```

## INTERNATIONAL SEARCH REPORT

International application No.

PCT/JP2013/077436

### A. CLASSIFICATION OF SUBJECT MATTER
*H02J17/00(2006.01)i, H01F38/14(2006.01)i, H02J7/00(2006.01)i*

According to International Patent Classification (IPC) or to both national classification and IPC

### B. FIELDS SEARCHED

Minimum documentation searched (classification system followed by classification symbols)
H02J17/00, H01F38/14, H02J7/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | WO 2011/065732 A2 (SAMSUNG ELECTRONICS CO., LTD.),<br>03 June 2011 (03.06.2011),<br>paragraphs [74], [78] to [86]<br>& JP 2013-512656 A      & US 2011/0127848 A1<br>& EP 2507893 A      & KR 10-2011-0060795 A<br>& CN 102640394 A | 1-5,8,11<br>6,7,9,10 |
| Y | JP 2012-182980 A (TDK Corp.),<br>20 September 2012 (20.09.2012),<br>paragraphs [0022] to [0025]<br>& US 2012/0223587 A1 | 6,7,9,10 |

☒ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 November, 2013 (15.11.13) | 26 November, 2013 (26.11.13) |

| Name and mailing address of the ISA/<br>Japanese Patent Office | Authorized officer |
|---|---|
| Facsimile No. | Telephone No. |

Form PCT/ISA/210 (second sheet) (July 2009)

36

**INTERNATIONAL SEARCH REPORT**

International application No.

PCT/JP2013/077436

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2000-217279 A  (Matsushita Electric Industrial Co., Ltd.), 04 August 2000 (04.08.2000), paragraph [0009] (Family: none) | 1-11 |
| A | JP 2010-124522 A  (Toyota Central Research and Development Laboratories, Inc.), 03 June 2010 (03.06.2010), paragraphs [0018], [0022] & US 2010/0123452 A1 | 1-11 |
| A | JP 2012-518382 A  (Witricity Corp.), 09 August 2012 (09.08.2012), paragraph [0266] & US 2010/0141042 A1      & EP 2396796 A & WO 2010/093997 A1      & CA 2752573 A1 & KR 10-2011-0127203 A   & AU 2010213557 A & CN 102439669 A | 1-11 |
| A | JP 2012-39707 A  (Panasonic Corp.), 23 February 2012 (23.02.2012), paragraphs [0005], [0006], [0028] to [0031] (Family: none) | 1-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4624768 B
- JP 2010239769 A
- JP 2011050140 A